# EUROPÄISCHE PATENTSCHRIFT

(11) **EP 2 297 229 B1**
(45) Veröffentlichungstag und Bekanntmachung des Hinweises auf die Patenterteilung: **05.11.2014**
(21) Anmeldenummer: 09776976.4
(22) Anmeldetag: 06.07.2009
(51) Int. Cl.: C08G 77/38, C08G 77/46

(54) **POLYHYDROXYFUNKTIONELLE POLYSILOXANE ALS ANTI-ADHÄSIVE UND SCHMUTZABWEISENDE ZUSÄTZE IN BESCHICHTUNGEN, POLYMEREN FORMMASSEN UND THERMOPLASTEN, VERFAHREN ZU IHRER HERSTELLUNG UND IHRE VERWENDUNG**
POLYHYDROXYFUNCTIONAL POLYSILOXANE AS ANTI-ADHESIVE AND DIRT-REPELLANT ADDITIVES IN COATINGS POLYMERIC MOULDED MASSES AND THERMOPLASTICS METHOD FOR PRODUCTION AND USE THEREOF
POLYSILOXANES À FONCTION POLYHYDROXY SERVANT D'ADDITIFS ANTI-ADHÉSIFS ET ANTI-SALISSURES DANS DES REVÊTEMENTS, DES MATIÈRES À MOULER POLYMÈRES ET DES THERMOPLASTIQUES, PROCÉDÉS DE FABRICATION DE CES COMPOSÉS ET LEUR UTILISATION

(30) Priorität: 08.07.2008 DE 102008032066
(43) Veröffentlichungstag der Anmeldung: 23.03.2011
(73) Patentinhaber: BYK-Chemie GmbH, 46483 Wesel (DE)
(72) Erfinder: JAUNKY, Wojciech, 46485 Wesel (DE); FRANK, Albert, 46509 Xanten (DE); BÖGERSHAUSEN, Hans-Willi, 47918 Tönisvorst (DE); GRIESEL, Wolfgang, 46499 Hamminkeln (DE); DELLA VALENTINA, Petra, 46537 Dinslaken (DE); OMEIS, Jürgen, 46286 Dorsten-Lembeck (DE)
(74) Vertreter: Leifert & Steffan
(86) Internationale Anmeldenummer: PCT/EP2009/004866
(87) Internationale Veröffentlichungsnummer: WO 2010/003610

(56) Entgegenhaltungen:
- EP-A- 1 489 128
- DE-A1-102006 031 152
- US-A1- 2006 034 875

## Beschreibung

Die vorliegende Erfindung betrifft polyhydroxyfunktionelle Polysiloxane, die sich durch die Addition polyhydroxyfunktioneller Allylpolyether an Alkyl-Wasserstoff Siloxane herstellen lassen.

Es ist bekannt, Beschichtungen und polymeren Formmassen Polysiloxane zuzusetzen, um bestimmte Eigenschaften zu erzielen, beispielsweise eine verbesserte Kratzbeständigkeit oder einen verbesserten Verlauf bei Möbel- und Automobillacken. Der Einsatz der Polysiloxane ist weit gestreut und sehr vielschichtig.

Polyhydroxyfunktionelle Polysiloxane sind im Prinzip aus zahlreichen Patentschriften bekannt.

US 3,381,019 beschreibt die Herstellung von Siloxan-Alkoholethern durch die Umsetzung von polyhydroxyfunktionellen Allylverbindungen an Si-H-funktionelle Polysiloxane. Die entstehenden Verbindungen werden als Schaumstabilisatoren und als Entschäumer für wäßrige Systeme beschrieben.

US 4,640,940 beschreibt die Herstellung Polyol-terminierter Silikone und den Einsatz dieser Verbindungen mit freien OH-Gruppen oder ihrer Derivate in härtbaren bzw. strahlenhärtbaren Zusammensetzungen.

US 5,916,992 und US 5,939,491 beschreiben Polysiloxanpolyole mit primären OH-Gruppen sowie härtbare Beschichtungen, die diese Polysiloxanpolyole enthalten. Diese Beschichtungen sollen sich durch verbesserte Haftung, Kratzfestigkeit und hohen Glanz auszeichnen.

US 4,431,789 beschreibt die Herstellung von Organosiloxanen mit alkoholischen Hydroxygruppen. Die Verbindungen werden hergestellt durch die Hydrosilylierung von Methyl-Wasserstoff-Siloxanen und Polyglycerinen, die eine terminale Allylgruppe aufweisen. Die so erhaltenen Verbindungen können als nichtionische oberflächenaktive Polysiloxane eingesetzt werden.

In der JP 10316540 werden Umsetzungsprodukte aus Methyl-Wasserstoff-Siloxanen und Allyl-Polyglycerinen, die denen in der US 4,431,789 sehr ähnlich sind, als Haarkonditionierungsmittel beschrieben.

US 2006/0034875 beschreibt die Synthese von Polyglycerin-modifizierten Polysiloxanen zur Verwendung als Emulgatoren. Diese Emulgatoren sind dazu geeignet, Öle durch Einlagerung unter Quellung in kosmetischen Zubereitungen zu speichern.

US 2005/0008600 (EP 1 496 080) beschreibt die Synthese von alternierenden (AB)ₙ-Copolymeren von Polysiloxanen und Polyglycerin und deren Verwendung in Kosmetika. Vorteilhaft wird beschrieben die Verleihung eines Soft-Feel-Effektes, der Feuchtigkeitsspendung und die Glanzverleihung.

US 6 365 670 offenbart die Herstellung von Organopolysiloxan-Gelen für kosmetische Anwendungen durch die Reaktion von einem ungesättigten Organopolysiloxan-Harz, einem Si-H-funktionellem Vernetzer und einem ungesättigten Polyglycerin.

US 2005/0261133 offenbart die Herstellung und Verwendung von glycerinmodifizierten Polysiloxanen als Spreitungsmittel für chemische Pflanzenschutzformulierungen. Die offenbarten Produkte reduzieren die Oberflächenspannung von Pflanzenschutzmitteln, um die Spreitung von Pestiziden und Insektiziden auf Blattoberflächen zu verbessern.

EP 1 489 128 A1 beschreibt die Synthese von Polysiloxanen, die mit verzweigten Polyglycerinen modifiziert sind. Zur Modifizierung des hydroxy-funktionellen Polysiloxans wird ein Verfahren angewendet, in welchem elementares Kalium oder basische Kaliumverbindungen zum Einsatz kommen, um die Polymerisation von den aktivierten Hydroxy-Gruppen aus zu starten. Die bei einer derartigen Reaktionsführung entstehenden Produkte weisen jedoch Äquilibrierungs- bzw. Spaltprodukte auf, welche den Einsatz der Zielverbindungen dort einschränken, wo es auf eine hohe Produkthomogenität ankommt, wie zum Beispiel in der Automobillackierung. Offenbar betrifft die EP 1 489 128 A1 daher insbesondere Anwendungen der modifizierten Silicone in Geweben/Textilien und kosmetischen Formulierungen. Benannte Vorteile sind eine verbesserte Benetzung und Adsorption auf verschiedenen Substraten, eine geringere Vergilbung und Hautreizung. Zum Stand der Technik führt die EP 1 489 128 A1 aus, dass bei der Reaktion von Allylgruppen modifizierten linearen Polyglycerolen mit Siliconhydriden gelartige Produkte erhalten werden, die eine nicht reproduzierbare Viskosität aufweisen.

Die obengenannten polyglycerin-modifizierten Polysiloxane finden hauptsächlich Einsatz in kosmetischen Formulierungen und sind dort vorteilhaft in Bezug auf die emulgierenden und feuchtigkeitsspendenden Eigenschaften, sowie für die Verleihung von Soft-Feel-Eigenschaften.

Aus der DE 10 2006 031 152 A1 sind verzweigte polyhydroxyfunktionelle Polysiloxane bekannt, die sich durch Addition Hydroxyoxetan-basierter polyhydroxyfunktioneller Allylpolyether an Alkyl-Wasserstoff-Siloxane herstellen lassen. Der Einsatz verzweigter poly(hydroxyoxetan)-basierter Polysiloxane in sehr polaren Lacksystemen, insbesondere wässrigen Lacksystemen, unterliegt jedoch gewissen Beschränkungen, die teilweise auf die Löslichkeit der Polysiloxane zurückgeführt werden können. Daher bestand ein Bedarf an Additiven, die auch für polare Syteme besonders geeignet sind.

Die Aufgabe der vorliegenden Erfindung bestand in der Verbesserung der Eigenschaften von Beschichtungsmitteln, polymeren Formmassen und Thermoplasten. Insbesondere bestand die Aufgabe darin, Beschichtungsmittel, polymere Formmassen und Thermoplasten bereitzustellen, die eine verbesserte anti-adhäsive und/oder schmutzabweisende Wirkung zeigen. Weiterhin sollen die zur Vermittlung dieser verbesserten Eigenschaften zugesetzten Additive die anderen Eigenschaften der Beschichtungsmittel, polymeren Formmassen oder Thermoplasten möglichst nicht beeinträchtigen. Die zugesetzten Additive sollen außerdem in relativ geringen Mengen ihre Wirksamkeit entfalten können. Die Beschichtungsmittel, polymeren Formmassen und Thermoplasten sollen ihre anti-adhäsive und/oder schmutzabweisende Wirkung weiterhin über einen langen Zeitraum von mehreren Jahren auch bei Außenbewitterung nahezu beibehalten. Dies sollte auch die Permanenz des anti-adhäsiven und/oder schmutzabweisenden Effektes über mehrere Reinigungszyklen hinweg mit einschließen.

Völlig überraschenderweise wurde gefunden, dass die oben beschriebenen Aufgaben durch polyhydroxyfunktionelle Polysiloxane gelöst werden, die sich durch die Addition mindestens eines verzweigten glycidol-basierten polyhydroxyfunktionellen Allylpolyethers in Gegenwart eines Säure puffernden Agens an ein Si-H-funktionelles Alkyl-Polysiloxan herstellen lassen. Dabei war insbesondere überraschend, dass die in der EP 1 489 128 A1 berichteten Nachteile bei der Reaktion linearer Polyglycerole mit Siliconhydriden nicht beim Einsatz der verzweigten glycidol-basierten polyhydroxyfunktionellen Allylpolyether auftreten und sich somit Produkte erhalten lassen, die sich nicht nur strukturell von mit linearen Polyglycerolen modifizierten Siliconen unterscheiden, sondern auch eine hohe Produkthomogenität aufweisen.

Weiterhin zeigte es sich als vorteilhaft, dass die OH-Gruppen des Polyglycidol-Blocks mit reaktiven Gruppen des Bindemittels vernetzen können und somit einen dauerhaften Effekt gewährleisten.

Beschichtungsmittel, polymere Formmassen oder Thermoplasten, denen diese Additionsprodukte zugesetzt werden, weisen ausgezeichnete anti-adhäsive und schmutzabweisende Eigenschaften auf. Die erfindungsgemäßen Additionsprodukte beeinträchtigen auch die anderen Eigenschaften der Beschichtungsmittel, polymeren Formmassen oder Thermoplasten nicht wesentlich. Dabei können diese polyhydroxyfunktionellen Polysiloxane den Beschichtungsmitteln oder polymeren Formmassen in relativ geringen Mengen (Additivmengen) zugesetzt werden. Die physikalischen Eigenschaften der ursprünglichen Beschichtungsmittel, polymeren Formmassen und Thermoplasten beispielsweise in Bezug auf Korrosionsschutz, Glanzhaltung und Witterungsbeständigkeit werden durch die geringen Konzentrationen des Additivs nicht beeinträchtigt. Beschichtungsmittel, polymere Formmassen und Thermoplasten, die die erfindungsgemäßen Additionsprodukte enthalten, zeigen die gewünschten Eigenschaften in der Regel auch über einen Zeitraum von mehreren Jahren hinweg und behalten diese Eigenschaften auch über mehrere Reinigungszyklen hinweg bei.

Das erfindungsgemäße polyhydroxyfunktionelle Polysiloxan, das Beschichtungsmitteln, polymeren Formmassen und Thermoplasten zugesetzt werden kann, ist herstellbar über die Addition mindestens eines verzweigten polyhydroxyfunktionellen Allylpolyethers an ein Si-H-funktionelles Polysiloxan. Der Ausdruck "verzweigter Polyether" steht hierbei für einen Polyether, in dem die Hauptkette und mindestens eine Seitenkette Polyetherbrücken enthält. Vorzugsweise weist der mindestens eine verzweigte Polyether eine hyperverzweigte Struktur auf. Die Verzweigungen können beispielsweise durch NMR-Analyse nachgewiesen werden.

Bei dem Si-H-funktionellen Polysiloxan kann es sich um ein Kettenpolymer, ein cyclisches Polymer, ein verzweigtes Polymer oder ein vernetztes Polymer handeln. Bevorzugt handelt es sich um ein Kettenpolymer oder ein verzweigtes Polymer. Besonders bevorzugt handelt es sich um ein Kettenpolymer. Bei dem Si-H-funktionellen Alkyl-Polysiloxan handelt es sich vorzugsweise um ein Alkyl-Wasserstoff-Polysiloxan, das mit entsprechenden C₁-C₁₄-Alkylen, -Arylen oder -Aralkylen substituiert ist. Bevorzugt handelt es sich bei dem Alkyl-Wasserstoff-Polysiloxan um ein Methyl-Wasserstoff-Polysiloxan.

Bevorzugter Gegenstand der Erfindung sind polyhydroxyfunktionelle kettenförmige Polysiloxane, die sich mit der folgenden allgemeinen Formel (I) darstellen lassen: 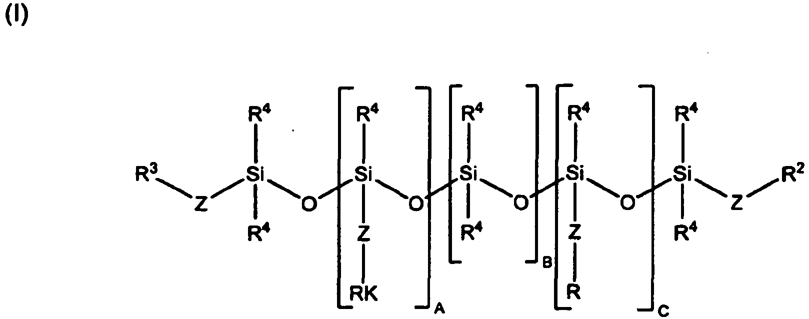 wobei
- Z: = C₁-C₁₄-Alkylen,
- RK: = unverzweigter Polyetherrest aus Alkylenoxid-Einheiten mit 1-6 Kohlenstoffatomen, und/oder aliphatischer und/oder cycloaliphatischer und/oder aromatischer Polyesterrest mit einem gewichtsmittleren Molekulargewicht zwischen 200 und 4000 g/mol
- R: = polyhydroxyfunktioneller verzweigter Polyglycidol-Polyetherrest, der aus einer verzweigten Polyglycidolgruppe besteht oder diese enthält,
- R² und R³: unabhängig voneinander für C₁-C₁₄-Alkyl, -Aryl oder -Aralkyl, -O(C₁-C₁₄-Alkyl, -Aryl oder -Aralkyl), -OCO(C₁-C₁₄-Alkyl, -Aryl oder -Aralkyl), -O-CO-O(C₁-C₁₄-Alkyl, -Aryl oder -Aralkyl), -OSO₂(C₁-C₁₄-Alkyl, -Aryl oder -Aralkyl), -H, -Cl, -F, -OH, -R, -RK stehen,
- R⁴: = C₁-C₁₄-Alkyl, -Aryl oder -Aralkyl,
- A: = 0 - 20, bevorzugt 1 - 15, besonders bevorzugt 1 - 8,
- B: = 2 - 300, bevorzugt 10 - 200, besonders bevorzugt 15 - 100 und
- C: = 0 - 20, bevorzugt 1 - 15, besonders bevorzugt 1 - 8 ist;
wobei für C = 0 gilt, dass R³ = R und/oder R² = R ist.

Wenn die Einheit -[SiR⁴(Z-R)]-O- vorhanden ist, d. h. C mindestens 1 ist, so ist es möglich, dass R² und R³ verschieden von R sind.

Gewichtsmittlere und zahlenmittlere Molekulargewichte werden im Rahmen dieser Erfindung für die eingesetzten Ausgangsverbindungen sowie die Endprodukte durch Gelpermeationschromatographie gegen einen Polystyrolstandard bestimmt.

Verbindungen der allgemeinen Formel (I), bei welchen A mindestens 1 ist, werden vorteilhaft in solchen Systemen eingesetzt, die einer Verträglichkeitsanpassung bedürfen.

Bei den der oben angegebenen Strukturformel entsprechenden Copolymeren kann es sich um statistische Copolymere, alternierende Copolymere oder um Blockcopolymere handeln. Auch kann durch die Abfolge der Seitenketten entlang des Silikonrückgrats ein Gradient gebildet werden. Die A Einheiten der Formel -[SiR⁴(Z-RK)]-O-, die B Einheiten -Si(R⁴)₂-O- und die C Einheiten -[SiR⁴(Z-R)]-O- können in der Polysiloxankette in beliebiger Reihenfolge angeordnet sein.

Die erfindungsgemäßen kettenförmigen polyhydroxyfunktionellen Polysiloxane bestehen, wie aus der Struktur der Formel (I) und den entsprechenden Definitionen für A, B und C gefolgert werden kann, aus 4 bis 342 Siloxaneinheiten. Vorzugsweise bestehen die erfindungsgemäßen kettenförmigen polyhydroxyfunktionellen Polysiloxane aus 10 bis 100 Siloxaneinheiten, bevorzugt aus 20 bis 80 Siloxaneinheiten, besonders bevorzugt aus 30 bis 70 Siloxaneinheiten.

Um den polyhydroxyfunktionellen verzweigten Polyetheralkylrest -Z-R in das Si-H-funktionelle Polysiloxan einzubringen, bedient man sich vorzugsweise eines oder mehrerer verzweigter polyhydroxyfunktioneller Allylpolyether, die sich durch ringöffnende Polymerisation von Glycidol oder von Glycerolcarbonat mit einer eine oder mehrere Hydroxygruppen tragenden allylischen Startverbindungen herstellen lassen. Diese verzweigten polyhydroxyfunktionellen Allylpolyether können durch Addition in das Polysiloxan eingeführt werden. Sie besitzen üblicherweise genau eine Allylgruppe, d.h. sie sind monoallylisch und wirken somit nicht als Vernetzer oder Verknüpfer zwischen zwei oder mehr Si-H-funktionellen Polysiloxanen.

Diese allylischen Startverbindungen können in Bezug auf die Hydroxygruppen monofunktionell sein.

Bevorzugt eingesetzt werden mono-hydroxyfunktionelle allylische Startverbindungen aus der Gruppe bestehend Allylalkohol, Ethylenglycol-monoallylether, Allylpolyethylenglykol, Allylpolypropylenglykol, Allylpolyethylenipolypropylenglykol-Mischpolymerisate, wobei Ethylenoxid und Propylenoxid in Random-Struktur oder blockweise angeordnet sein können.

Besonders bevorzugt werden als mono-hydroxyfunktionelle allylische Startverbindungen Allylalkohol, Ethylenglycol-monoallylether und Allylpolyethylenglykol eingesetzt. Ganz besonders bevorzugt ist Allylalkohol.

Eingesetzt werden können auch die entsprechenden Methallyl-Verbindungen, wie z.B. Methallylalkohol, Methallylpolyethylenglykol, usw. Wenn im Rahmen dieser Erfindung von allylischen Startverbindungen gesprochen wird, umfasst dieser Begriff auch die methallylischen Analoga, ohne dass dies gesondert angesprochen werden müsste. Wird der Begriff "(meth)allylisch" verwendet, so umfasst dieser ebenfalls "allylisch" wie auch "methallylisch".

Auch andere mono-hydroxyfunktionelle allylische und methallylische Startverbindungen wie z.B. Allylphenol können eingesetzt werden. Weitere Möglichkeiten sind die Verwendung von (meth)allylischen Startverbindungen mit anderen Wasserstoff-aktiven Gruppen als der Hydroxygruppe, wie z.B. Amino- (-NH₂, -NH(Alkyl)) oder Thiol-Gruppen (-SH).

Di-, tri- oder polyfunktionelle Startverbindungen können auch eingesetzt werden, die im Hinblick auf die Polydispersität und einige physikalische Eigenschaften Vorteile zeigen. Die Hydroxygruppen der di- oder polyfunktionellen monoallylischen Startverbindung sind vorzugsweise verethert mit einem Di-, Tri- oder Polyol, zum Beispiel einem Dihydroxy-, Trihydroxy- oder Polyhydroxy-Ester oder -Polyester oder einem Dihydroxy-, Trihydroxy- oder Polyhydroxy-Ether oder Polyether, wie zum Beispiel einem 5,5-Dihydroxyalkyl-1,3-dioxan, einem 5,5-Di(hydroxyalkoxy)-1,3-dioxan, einem 5,5-Di(hydroxyalkoxyalkyl)-1,3-dioxan, einem 2-Alkyl-1,3-propandiol, einem 2,2-Dialkyl-1,3-propandiol, einem 2-Hydroxy-1,3-propandiol, einem 2,2-Dihydroxy-1,3-propandiol, einem 2-Hydroxy-2-alkyl-1,3-propandiol, einem 2-Hydroxyalkyl-2-alkyl-1,3-propandiol, einem 2,2-Di(hydroxyalkyl)-1,3-propandiol, einem 2-Hydroxyalkoxy-2-alkyl-1,3-propandiol, einem 2,2-Di(hydroxyalkoxy)-1,3-propandiol, einem 2-Hydroxyalkoxyalkyl-2-alkyl-1,3-propandiol oder einem 2,2-Di(hydroxyalkoxyalkyl)-1,3-propandiol.

Bevorzugte Ausführungsformen der genannten di- oder polyfunktionellen monoallylischen Startverbindung sind verethert mit Dimeren, Trimeren oder Polymeren von 5,5-Dihydroxyalkyl-1,3-dioxanen, 5,5-Di(hydroxyalkoxy)-1,3-dioxanen, 5,5-Di(hydroxyalkoxyalkyl)-1,3-dioxanen, 2-Alkyl-1,3-propandiolen, 2,2-Dialkyl-1,3-propandiolen, 2-Hydroxy-1,3-propandiolen, 2,2-Dihydroxy-1,3-propandiolen, 2-Hydroxy-2-alkyl-1,3-propandiolen, 2-Hydroxyalkyl-2-alkyl-1,3-propandiolen, 2,2-Di(hydroxyalkyl)-1,3-propandiolen, 2-Hydroxyalkoxy-2-alkyl-1,3-propandiolen, 2,2-Di(hydroxyalkoxy)-1,3-propandiolen, 2-Hydroxyalkoxyalkyl-2-alkyl-1,3-propandiolen und 2,2-Di(hydroxyalkoxyalkyl)-1,3-propandiolen.

Bei den genannten Alkylresten handelt es sich vorzugsweise um lineare oder verzweigte C₁-C₂₄-, wie zum Beispiel C₁-C₁₂- oder C₁-C₈-, -Alkyle oder -Alkenyle. Besonders bevorzugt als Alkylreste sind Methyl- und Ethylreste. Der Ausdruck "Alkoxy" steht vorzugsweise für Methoxy, Ethoxy, Propoxy, Butoxy, Phenylethoxy und umfasst bis zu 20 Alkoxyeinheiten oder eine Kombination von zwei oder mehr Alkoxy-Einheiten.

Weiter bevorzugte Ausführungsformen der allylischen Startverbindung mit mindestens zwei Hydroxylgruppen umfassen Monoallylether oder Monomethallylether des Glycerins, des Trimethylolethans und Trimethylolpropans, Monoallyl- oder Mono(methallyl)-Ether des Di(trimethylol)ethans, Di(trimethylol)propans und Pentaerythritol sowie von 1,Ω-Diolen, wie zum Beispiel Mono-, Di-, Tri- und Polyethylenglykolen, Mono-, Di-, Tri- und Polypropylenglykolen, 1,4-Butandiol, 1,5-Pentandiol, 1,6-Hexandiol, 1,6-Cyclohexandimethanol und deren entsprechend Alkyl-, Alkylalkoxy- und Alkoxyalkyl-substituierten Analoga sowie deren Derivate. Die Bezeichnungen "Alkyl" and "Alkoxy" entsprechen hier den zuvor genannten Definitionen.

Besonders bevorzugt ist die mindestens zwei Hydroxyverbindungen aufweisende allylische Startverbindung abgeleitet von einer Verbindung aus der Gruppe bestehend aus 5,5-Dihydroxymethyl-1,3-dioxan, 2-Methyl-1,3-propandiol, 2-Methyl-2-ethyl-1,3-propandiol, 2-Ethyl-2-butyl-1,3-propandiol, Neopentylglykol, Dimethylpropan, Glycerin, Trimethylolethan, Trimethylolpropan, Diglycerin, Di(trimethylolethan), Di(trimethylolpropan), Pentaerythritol, Di(pentaerythritol), Anhydroenneaheptitol, Sorbitol and Mannitol.

Besonders bevorzugt werden als di- oder poly-hydroxyfunktionelle allylische Startverbindungen Trimethylolpropanmonoallylether oder Glycerinmonoallylether eingesetzt.

An derartigen allylischen Startverbindungen erfolgt die ringöffnende Polymerisation mit Glycidol oder mit Mischungen von Glycidol mit Glycidylethern und/oder mit Alkylenoxiden. Dabei kann die Polymerisation der Mischungen von Glycidol mit Glycidylethern und/oder mit Alkylenoxiden in Random-Struktur oder blockweise ausgeführt werden. Die Glycidylether können Alkyl- oder Alkoxy-substituiert sein.

Der Ausdruck "Alkyl" steht hier vorzugsweise für lineare oder verzweigte C₁-C₂₄-, wie zum Beispiel C₁-C₁₂- oder C₁-C₈-, -Alkyle oder -Alkenyle. Besonders bevorzugt steht der Ausdruck "Alkyl" für Methyl, Ethyl, Propyl und Butyl. Der Ausdruck "Polyalkoxy" steht vorzugsweise für Methoxy, Ethoxy, Propoxy, Butoxy, Phenylethoxy und umfasst bis zu 20 Alkoxyeinheiten oder eine Kombination von zwei oder mehr Alkoxy-Einheiten.

Bevorzugt wird Glycidol oder Glycerolcarbonat als Hauptmonomer eingesetzt. Dies bedeutet, dass vorzugsweise mindestens 50 Mol-% besonders bevorzugt mindestens 70 Mol-% und ganz besonders bevorzugt mindestens 80 Mol-% des Rests R aus ringgeöffnetem Glycidol bzw. Glycerolcarbonat aufgebaut sind.

Das allyl-funktionelle hyperverzweigte Polyglycidol ist darstellbar über einen ringöffnenden Polymerisationsprozess. Um gut definierte Strukturen zu erhalten, wird eine anionische ring-öffnende Polymerisation unter langsamer Monomerzugabe besonders bevorzugt.

Vorzugsweise wird die folgende Methode wird angewendet: die Hydroxygruppen der allyl-funktionellen Startverbindung werden teilweise durch Alkalimetallhydroxide oder -alkoxide deprotoniert, und nach Entfernung des Wassers oder Alkohols durch Destillation wird eine Mischung aus Initiator und Initiator-Alkoholat erhalten Dann wird das Glycidol bei einer Temperatur zwischen 80°C und 100°C tropfenweise zur Initiator/Initiator-Alkoholat-Mischung gegeben Die lebende anionische ring-öffnende Polymerisation wird durch den schnellen Austausch der Protonen zwischen den Alkohol- und Alkoholat-Gruppen der wachsenden Ketten kontrolliert. Das Alkali wird nach der Reaktion z. B. durch die Behandlung mit einem sauren Ionenaustauscher entfernt. Weitere Details zu Reaktionen, Reaktanten und Verfahrensweisen sind in folgenden Veröffentlichungen zu finden: Sunder A, Hanselmann R, Frey H, Müllhaupt R.: Macromolecules 1999; 32:4240-6, EP1785410 or US2003/0120022.

Das Glycidol kann durch Glycerolcarbonat ersetzt werden. Die Synthese von Glycerolcarbonat und die Reaktionsbedingungen unter welchen diese zu hyperverzweigten Polyglycidolen umgesetzt werden sind dem Fachmann beispielsweise aus Rokicki et al. in: Green Chemistry, 2005, 7, 529-539 bekannt

Wenn hierin von hyperverzweigten Polyglycidolen die Rede ist, so können diese generell durch ringöffnende Polymerisation entweder von Glycidol oder von Glycerolcarbonat erhalten werden. Wird hierin Bezug genommen auf eine ringöffnende Polymerisation von Glycidol, so umfasst dies generell auch die Variante, bei welcher Glycerolcarbonat ringöffnend umgesetzt wird, wobei der Fachmann gegebenenfalls die Reaktionsbedingungen an die bei Rockicki et al. (supra) beschriebenen anpasst.

In einer umweltschonenderen Ausführungsform der vorliegenden Erfindung wird Glycerolcarbonat zur Herstellung der hyperverzweigten Polyglycidolstrukturen eingesetzt. Glycerolcarbonat läßt sich umweltverträglicher herstellen als Glycidol und besitzt nach derzeitigen Erkenntnissen nicht die Karzinogenität des Glycidol.

Die Hydroxygruppen können frei bleiben oder können teilweise oder komplett modifiziert werden, um die optimale Kompatibilität in der Anwendungsformulierung einstellen zu können.

Die polyhydroxyfunktionellen Allylverbindungen weisen mindestens eine verzweigende Generation, bevorzugt mindestens zwei verzweigende Generationen auf. Der Ausdruck generation" wird, wie in der WO 02/40572, im vorliegenden Fall auch zur Bezeichnung von pseudo-Generationen verwendet. Die Verzweigungen können beispielsweise durch NMR-Analyse nachgewiesen werden. Die Polydispersität (M_{w}/Mₙ) der verzweigten Allylverbindungen beträgt vorzugsweise <3, besonders bevorzugt <2 und ganz besonders bevorzugt <1,5.

Die folgende Formel (II) zeigt ein bevorzugt erhaltenes dendrimeres Reaktionsprodukt, das aus Ethylenglykol-monoallylether und Glycidol in drei Generationen erhalten werden wird. Jedoch werden die erhaltenen Produkte in der Realität am besten als Pseudo-Dendrimere oder hyperverzweigte allyl-funktionelle Polyglycidole beschrieben.

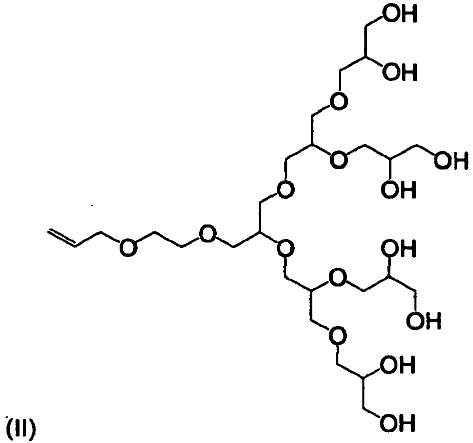

Die polyhydroxyfunktionellen Polysiloxane können durch Umsetzung mindestens einer allylischen Startverbindung mit mindestens einem Glycidol oder Glycerolcarbonat und nachfolgender Addition in Gegenwart eines Säure puffernden Agens an das Si-H-funktionelle Polysiloxan hergestellt werden. Bevorzugt ist eine Umsetzung der mindestens einen allylischen Startverbindung mit einem Glycidol oder Glycerolcarbonat und nachfolgende Addition an das Si-H-funktionelle Alkyl-Polysiloxan.

Die Synthese der polyhydroxyfunktionellen Polysiloxane erfolgt vorzugsweise über eine Addition der durch Umsetzung der allylischen Startverbindung mit mindestens einem Glycidol erhaltenen Allylpolyether an das Si-H-funktionelle Alkyl-Polysiloxan.

Zur Einstellung einer besseren Verträglichkeit der aus diesen polyhydroxyfunktionellen Allylpolyethern hergestellten polyhydroxyfunktionellen Polysiloxane können die freien Hydroxygruppen der Allylpolyether auch vor oder nach der Hydrosilylierungsreaktion mit dem Si-H-funktionellen Polysiloxan alkoxyliert werden. Bevorzugt werden sie ethoxyliert und/oder propoxyliert und/oder butoxyliert und/oder mit Styroloxid alkoxyliert. Dabei können Reinalkoxylate oder Mischalkoxylate hergestellt werden. Besonders bevorzugt werden die freien Hydroxygruppen der Allylpolyether vor der Hydrosilylierungsreaktion ethoxyliert.

Weiterhin können die freien Hydroxygruppen auch abgesehen von einer Alkoxylierung auch auf andere Weise chemisch modifiziert werden. Beispielhaft zu nennen sind die Methylierung, die Acrylierung, die Acetylierung, die Veresterung und die Umsetzung zum Urethan durch eine Reaktion mit Isocyanaten. Ein Beispiel für die letztere Reaktion ist die Umsetzung der Hydroxygruppen mit z.B. TDI-Monoaddukten, die sich durch die Umsetzung von Polyethermonoolen mit TDI (Toluoldiisocyanat) darstellen lassen.

Auch alle anderen bekannten Modifikationsmöglichkeiten von Hydroxygruppen können angewendet werden. Die erwähnten chemischen Umsetzungen müssen dabei nicht vollständig erfolgen. So kann auch nur ein Teil der freien Hydroxygruppen, d.h. insbesondere mindestens eine Hydroxygruppe chemisch modifiziert sein.

Vorzugsweise wird die Modifizierung vor der Hydrosilylierungsreaktion durchgeführt. In diesem Fall kann die Modifizierung der freien Hydroxygruppen auch die nachfolgende Hydrosilylierungsreaktion positiv beeinflussen.

Über den Anteil der freien Hydroxygruppen im polyhydroxyfunktionellen Allylpolyether kann auch die Einbaufähigkeit beziehungsweise die Vemetzungsdichte des polyhydroxyfunktionellen Polysiloxans im Bindemittel gesteuert werden. Bleiben viele oder alle der ursprünglichen Hydroxyfunktionen erhalten, wird eine hohe Vernetzungsdichte erhalten, die zu einer besseren Härte des Lacksystems führen kann. Werden dagegen im Wesentlichen alle Hydroxygruppen blockiert, behält das Molekül eine gewisse Beweglichkeit und kann bei einem mehrschichtigen Lackaufbau durch die Schichten wandern, so dass die Zwischenschichthaftung nicht negativ beeinflusst wird.

Um Verträglichkeiten der polyhydroxyfunktionellen Polysiloxane mit den Beschichtungsmitteln, den polymeren Formmassen und den Thermoplasten anpassen zu können, kann es sinnvoll sein, in Kombination mit den erfindungsgemäß verwendeten polyhydroxyfunktionellen Allylverbindungen auch Allylpolyether einzusetzen, die durch die Alkoxylierung von Allylalkohol oder Monoallylethern mit einer oder mehreren Hydroxygruppen mit Alkylenoxiden, insbesondere Ethylenoxid und/oder Propylenoxid und/oder Butylenoxid und/oder Styroloxid, hergestellt werden. Diese schon seit langem bekannten Allylpolyether werden zur besseren Unterscheidung im Folgenden "unverzweigte Allylpolyether" genannt und führen zu "unverzweigten Polyetherresten" Z-RK im Polysiloxan. Dabei können sowohl Reinalkoxylate als auch Mischalkoxylate hergestellt werden. Bei Mischalkoxylaten kann die Alkoxylierung blockweise, alternierend oder statistisch sein. Auch können die Mischalkoxylate einen Verteilungsgradienten in Bezug auf die Alkoxylierung enthalten.

Die Endgruppen bzw. die Endgruppe des unverzweigten Allylpolyethers kann hydroxyfunktionell sein, oder aber, wie oben beschrieben, beispielsweise durch Methylierung oder Acetylierung, umgesetzt sein.

Vorzugsweise handelt es bei dem unverzweigten Polyetherrest RK um ein Ethylenoxid ([EO]), ein Propylenoxid ([PO]) oder ein Ethylenoxid-Propylenoxid-Copolymer der folgenden Formel (III)

RK = - O - [EO]ᵥ - [PO]_{w} - R⁶ (III)

mit v = 0 - 70; bei v = 0 ist w = 1;
mit w = 0 - 50; bei w = 0 ist v = 1;
wobei R⁶ für H oder eine aliphatische, aromatische, araliphatische Gruppe steht, die auch Heteroatome oder funktionelle Gruppen enthalten kann, wie z.B. Ester, Urethan.

Durch unterschiedliche Anteile an ([EO]) und ([PO]) können die Eigenschaften des erfindungsgemäßen Polysiloxans beeinflusst werden. So kann speziell wegen der größeren Hydrophobie der [PO]-Einheiten im Vergleich zu den [EO]-Einheiten durch die Wahl geeigneter [EO]:[PO]-Verhältnisse die Hydrophobie des erfindungsgemäßen Polysiloxans gesteuert werden.

Bei den der oben angegebenen Strukturformel entsprechenden Copolymeren kann es sich um statistische Copolymere, alternierende Copolymere oder um Blockcopolymere handeln. Auch kann durch die Abfolge der Alkylenoxideinheiten ein Gradient gebildet werden.

Es ist möglich, nicht nur einen unverzweigten Allylpolyether einzusetzen. Zur besseren Steuerung der Verträglichkeit können auch Mischungen unterschiedlicher unverzweigter Allylpolyether eingesetzt werden.

Die Reaktionsführung kann so erfolgen, daß die unverzweigten Allylpolyether und die verzweigten Allylpolyether nacheinander an das Si-H-funktionelle Alkyl-Polysiloxan addiert werden. Die Allylpolyether können aber auch vor der Addition gemischt werden, so dass dann die Allylpolyethermischung an das Si-H-funktionelle Alkyl-Polysiloxan addiert wird.

Um Verträglichkeiten der polyhydroxyfunktionellen Polysiloxane mit den Beschichtungsmitteln, den polymeren Formmassen und den Thermoplasten anpassen zu können, kann es sinnvoll sein, in Kombination mit den erfindungsgemäß verwendeten polyhydroxyfunktionellen Allylverbindungen auch Allylpolyester einzusetzen, die durch die Veresterung von Alkoholen mit allylischer Doppelbindung (1-Alkenolen, wie z.B. 1-Hexenol, oder hydroxyfunktionelle Allylpolyethern, wie z.B. Ethylenglykolmonoallylether, Diethylglykolmonoallylether oder höhere Homologe) mit Hydroxycarbonsäuren, bzw. cyclischen Estern erhalten werden können. Bevorzugt erfolgt die Veresterung über eine ringöffnende Polymerisation mit Propiolacton, Caprolacton, Valerolacton oder Dodecalacton, sowie deren Derivaten. Besonders bevorzugt erfolgt die ringöffnende Polymerisation mit Caprolacton. Dabei können sowohl Reinpolyester als auch Mischpolyester hergestellt werden. Bei Mischpolyestern kann die Veresterung blockweise, alternierend oder statistisch sein. Auch können die Mischpolyester einen Verteilungsgradienten in Bezug auf die Veresterung enthalten.

Die Endgruppen des Allylpolyesters können hydroxyfunktionell sein, oder aber, beispielsweise durch Methylierung oder Acetylierung, umgesetzt sein.

Die gewichtsmittleren Molekulargewichte der Allylpolyester bzw. Methallylpolyester liegen bevorzugt zwischen 300 und 2000 g/mol und besonders bevorzugt zwischen 400 und 1000 g/mol.

Die Reaktionsführung kann so erfolgen, daß die linearen Allylpolyester, Methallylpolyester, Allylpolyether bzw. Methallylpolyether und die verzweigten Allylpolyether bzw. Methallylpolyether nacheinander an das Si-H-funktionelle Alkyl-Polysiloxan addiert werden. Die verzweigten und die unverzweigten Allyl- bzw. Methallylverbindungen können aber auch vor der Addition gemischt werden, so dass dann diese Mischung an das Si-H-funktionelle Alkyl-Polysiloxan addiert wird.

Um Verträglichkeiten der polyhydroxyfunktionellen Polysiloxane mit den Beschichtungsmitteln, den polymeren Formmassen und den Thermoplasten anpassen zu können, kann es sinnvoll sein, in Kombination mit den erfindungsgemäß verwendeten polyhydroxyfunktionellen Allylverbindungen auch Mischungen aus den o.g. unverzweigten Allylpolyethern und Allylpolyestem einzusetzen.

Besonders bevorzugt - insbesondere in Easy-to-Clean-Anwendungen - sind dabei solche Polysiloxane, in welchen mindestens eine Si-H-funktionelle Gruppe mit einem unverzweigten Monoallylpolyether, einem unverzweigten Monomethallylpolyether, einem unverzweigten Monoallylpolyester oder einem unverzweigten Monomethallylpolyester und mindestens eine weitere Si-H-funktionelle Gruppe mit einem monoallylischen oder monomethallylischen polyhydroxyfunktionellen verzweigten Polyglycidol-Polyether umgesetzt ist.

In einer weiteren ganz besonders bevorzugten Ausführungsform für Easy-to-Clean-Anwendungen enthält, für den Fall, dass A = 0 bis 20, vorzugsweise 1 bis 8 und B = 10 bis 200 ist, mindestens einer der Reste R eine verzweigte Polyglycidolgruppe, die über eine lineare Polyalkoxylengruppe mit dem Rest Z verbunden ist, oder eine verzweigte Polyglycidolgruppe, die durch Alkoxylierung verlängert ist.

Besonders bevorzugt sind auch Polysiloxane der obigen allgemeinen Formel (I), in welchen A = 1 bis 8, B = 10 bis 200 und C = 0 bis 20 ist. Unter diesen sind wiederum solche bevorzugt, bei denen mindestens einer der Reste R eine verzweigte Polyglycidolgruppe enthält oder aus dieser besteht, und wobei die verzweigte Polyglycidolgruppe direkt an Z gebunden ist.

Insbesondere wurde gefunden, dass RK-Strukturen und/oder über eine lineare Alkoxylengruppe mit dem Rest Z verbundene verzweigte Polyglycidolgruppen im erfindungsgemäßen Polysiloxan zu besonders geeigneten Additiven für Easy-to-Clean-Anwendungen führen.

Generell gilt jedoch, dass alle erfindungsgemäßen Polysiloxane als Mold-Release-Additive geeignet sind und als solche Verwendung finden.

Generell können die Verträglichkeiten der polyhydroxyfunktionellen Polysiloxane auf die unterschiedlichsten Matrizes angepaßt werden. Um die polyhydroxyfunktionellen Polysiloxane beispielsweise in Polycarbonaten einzusetzen, kann man in die polyhydroxyfunktionellen Polysiloxane entsprechende Polycarbonat-Modifizierungen einbauen, wie dies z. B. in der US 6,072,011 beschrieben ist.

Besonders bevorzugt für den Einsatz in Beschichtungsmitteln, polymeren Formmassen und Thermoplasten ohne Verträglichkeitsprobleme sind Polysiloxane der allgemeinen Formel (IV) 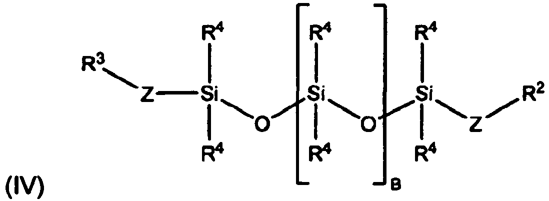 wobei
- Z: = C₁-C₁₄ Alkylen, und wobei mindestens ein Substituent aus der Gruppe bestehend aus R² und R³ für R steht und der andere für C₁-C₁₄-Alkyl, -Aryl oder -Aralkyl, -O(C₁-C₁₄-Alkyl, -Aryl oder -Aralkyl), -OCO(C₁-C₁₄-Alkyl, -Aryl oder -Aralkyl), -O-CO-O(C₁-C₁₄-Alkyl, -Aryl oder -Aralkyl), -OSO₂(C₁-C₁₄-Alkyl, -Aryl oder -Aralkyl), -H, - Cl, -F, -OH, -R,oder -RK, wobei
- RK: = unverzweigter Polyetherrest aus Alkylenoxid-Einheiten mit 1-6 Kohlenstoff-atomen, oder aliphatischer und/oder cycloaliphatischer und/oder aromatischer Polyesterrest mit einem gewichtsmittleren Molekulargewicht zwischen 200 und 4000 g/mol und
- R: = polyhydroxyfunktioneller verzweigter Polyglycidol-Polyetherrest, der aus einer verzweigten Polyglycidolgruppe besteht oder diese enthält,
- R⁴: = C₁-C₁₄-Alkyl, -Aryl oder -Aralkyl,
- B: = 2 - 300, bevorzugt 10 - 200, besonders bevorzugt 15 -100 ist.

Diese Verbindungen entsprechen den in der allgemeinen Formel (I) dargestellten Verbindungen für den Fall A=0 und C=0 für den Fall, dass mindestens einer der beiden Substituenten R² oder R³ ein polyhydroxyfunktioneller verzweigter Polyglycidol-Polyetherrest ist, der aus einer verzweigten Polyglycidolgruppe besteht oder diese enthält.

Besonders bevorzugte Verbindungen sind die Verbindungen der allgemeinen Formel (IV), für die R² = R³ = R ist. Aufgrund der endständigen polyhydroxyfunktionellen verzweigten Polyetherreste zeigen sie vielfach eine verbesserte Wirksamkeit. Sie können vorteilhaft in Beschichtungsmitteln, polymeren Formmassen und Thermoplasten eingesetzt werden, die keiner Verträglichkeitsanpassung durch Reste RK bedürfen.

Die eingesetzten Si-H-funktionellen Alkyl-Polysiloxane können auch streng monofunktionell sein, das heißt nur ein Silan-Wasserstoff-Atom aufweisen. Mit ihnen können bevorzugte Verbindungen erzeugt werden, in denen exakt eine der Gruppen R² oder R³ für einen Rest R steht. Die SiH-funktionellen Alkyl-Polysiloxane können zum Beispiel durch die folgende allgemeine Formel (V) dargestellt werden: 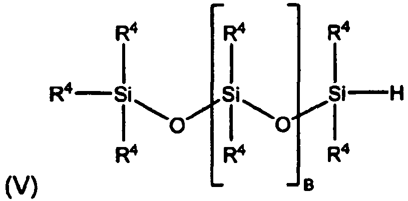 für die die oben genannten Definitionen für R⁴ und B gelten. Diese Verbindungen liefern polyhydroxyfunktionelle Polysiloxane der allgemeinen Formel (VI)

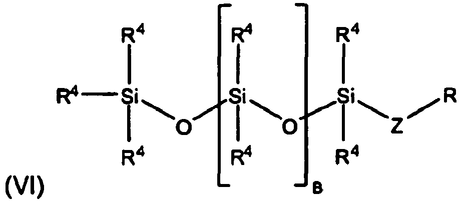

Die Synthese dieser linearen monofunktionellen Polysiloxane kann beispielsweise über eine lebende anionische Polymerisation cyclischer Polysiloxane erfolgen. Dieses Verfahren ist unter anderem bei T. Suzuki in Polymer, 30 (1989) 333 beschrieben. Die Reaktion wird beispielhaft in folgendem Reaktionsschema dargestellt:

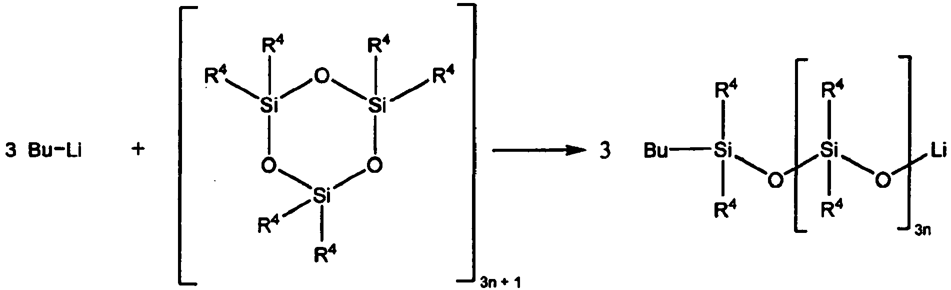

Die SiH(R⁴)₂-Funktionalisierung der Endgruppe kann mit funktionellen Chlorsilanen, beispielsweise Dialkylchlorsilan, analog dem folgenden Reaktionsschema nach dem dem Durchschnittsfachmann bekanntem Verfahren erfolgen.

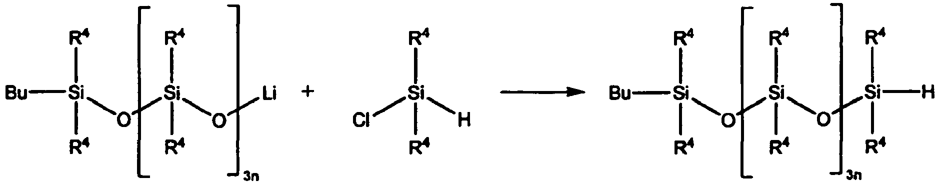

Eine weitere Möglichkeit zur Herstellung linearer, monofunktioneller Polysiloxane ist die Äquilibrierung cyclischer und offenkettiger Polydialkylsiloxane mit endständig Si-H-difunktionellen Polydialkylsiloxanen, wie bei Noll (Chemie und Technologie der Silicone, VCH, Weinhelm, 1984) beschrieben. Aus statistischen Gründen besteht das Reaktionsprodukt aus einer Mischung cyclischer, difunktioneller, monofunktioneller und nicht funktioneller Siloxane. Der Anteil an linearen Siloxanen im Reaktionsgemisch kann durch eine destillative Entfernung der niederen Zyklen erhöht werden. Innerhalb der linearen Polysiloxane sollte der Anteil SiH(R⁴)₂-monofunktioneller Polysiloxane im Reaktionsprodukt der Äquilibrierung möglichst hoch sein. Wenn Mischungen linearer Polysiloxane eingesetzt werden, so gilt für die Wirksamkeit der späteren erfindungsgemäßen Produkte, daß diese um so höher ist, je höher der Anteil der monofunktionellen erfindungsgemäßen Endprodukte ist. Beim Einsatz von Mischungen sollte der Anteil der monofunktionellen erfindungsgemäßen Endprodukte vorzugsweise der größte Anteil in der Mischung sein und bevorzugt mehr als 40 Gew.-% betragen. Typische an cyclischen Verunreinigungen abgereicherte Äquilibrierungsprodukte enthalten vorzugsweise weniger als 40 Gew.-% difunktioneller und weniger als 15 Gew.-% nichtfunktioneller linearer Polysiloxane, wobei insbesondere letztere weniger als 5 Gew.%, am besten überhaupt nicht, enthalten sind.

Ein Beispiel eines erfindungsgemäßen polyhydroxyfunktionellen Polysiloxans mit endständiger Funktionalisierung aus einem Polysiloxan mit endständigen Si-H-Gruppen zeigt die folgende Formel (VII):

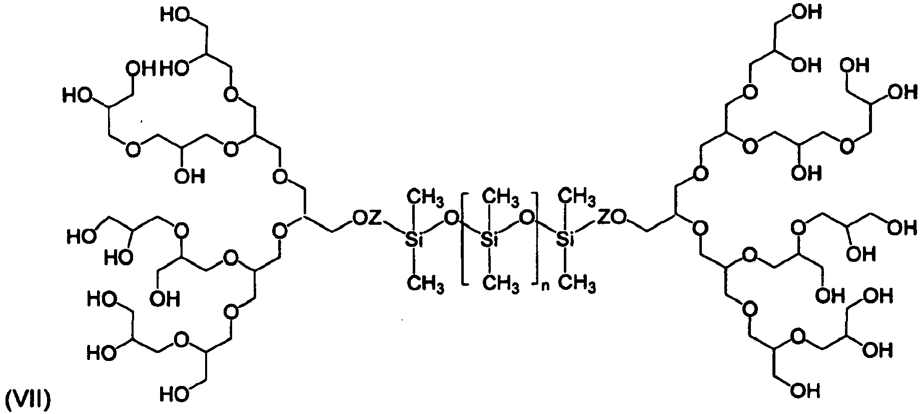

Ein Umsetzungsbeispiel eines monofunktionellen Silikons mit einem verzweigten Polyetherrest zeigt die folgende Formel (VIII):

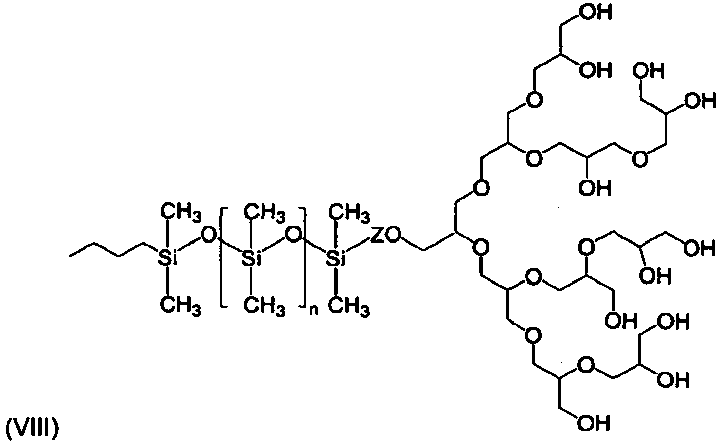

Typischerweise erfolgt die Hydrosilylierung unter den folgenden Bedingungen: Das Si-H-funktionelle Alkyl-Polysiloxan wird bei Raumtemperatur vorgelegt. Dann wird ein Säure pufferndes Agens zugegeben, um eventuell ablaufende Kondensations-Nebenreaktionen zu unterdrücken. Bei dem Säure puffernden Agens kann es sich beispielsweise um Natriumacetat oder Kaliumacetat in Mengen von 25 bis 200 ppm handeln. Abhängig von der zu erwartenden Exothermie der Reaktion wird ein Teil oder die Gesamtmenge der Allylverbindungen zugegeben. Es ist vorteilhaft, wenn zusätzlich ein Lösemittel eingesetzt wird, welches eine homogene Mischung der Allylverbindung mit dem Si-H-funktionellen Polysiloxan ermöglicht. Vorzugsweise wird das Lösemittel oder werden die Lösemittel so gewählt, dass sowohl eine homogene Lösung der erfindungsgemäß eingesetzten Allyl- bzw. Methallyl-Verbindungen als auch des Si-H-Alkyl-Polysiloxans in der Reaktionsmischung erhalten wird. Als geeignete Lösemittel kommen beispielsweise cyclische Ether, Glykolether, Alkohole und/oder Mischungen dieser Lösemittel mit aliphatischen und/oder aromatischen Kohlenwasserstoffen in Frage. Besonders bevorzugt unter diesen sind sekundäre Alkohole wie beispielsweise Isopropanol, Isobutanol und/oder Propylenglykolmethylether. Durch die homogenisierende Wirkung tragen die Lösemittel weiter dazu bei, dass besonders homogene Produkte erhalten werden. Unter einer Stickstoffatmosphäre wird dann der Reaktorinhalt beispielsweise auf 75°C bis 80°C erwärmt. Ein Katalysator, wie ein Übergangsmetall, beispielsweise Nickel, Nickelsalze, Iridiumsalze oder vorzugsweise eine Verbindung eines Edelmetalls der Gruppe VIII, wie beispielsweise Hexachloroplatinsäure oder cis-Diamminplatin(II)-dichlorid, wird dann zugesetzt. Durch die dann ablaufende exotherme Reaktion steigt die Temperatur. Normalerweise wird versucht, die Temperatur in einem Bereich von 90°C bis 120°C zu halten. Falls ein Teil der Allylverbindungen noch zudosiert werden muß, erfolgt die Zugabe in der Art, daß die Temperatur von 90°C bis 120°C nicht überschritten wird, aber auch eine Temperatur von 70°C nicht unterschritten wird. Nach vollständiger Zugabe wird die Temperatur noch für einige Zeit bei 90°C bis 120°C gehalten. Der Ablauf der Reaktion kann durch eine gasvolumimetrische Bestimmung der verbleibenden Si-H-Gruppen oder durch Infrarot-Spektroskopie auf das Verschwinden der Absorptionsbande des Siliciumhydrids (Si-H: 2150 cm⁻¹) überwacht werden.

Die erfindungsgemäßen polyhydroxyfunktionellen Polysiloxane können nachträglich noch chemisch modifiziert werden, um beispielsweise bestimmte Verträglichkeiten mit Bindemitteln einzustellen. Die Modifizierungen können eine Acetylierung, eine Methylierung oder eine Umsetzung mit Monoisocyanaten sein. Außerdem können durch Umsetzung mit Carbonsäureanhydriden, beispielsweise mit Phthalsäureanhydrid oder Bernsteinsäureanhydrid, Säurefunktionen eingebaut werden. Dabei können die Hydroxygruppen partiell oder vollständig umgesetzt werden. Durch Umsetzung mit entsprechenden ungesättigten Anhydriden, beispielsweise Maleinsäureanhydrid, kann neben einer Carboxygruppe auch eine oder mehrere reaktive Doppelbindungen in das Molekül eingebaut werden. Dabei können die Hydroxyfunktionen auch mit strukturell verschiedenen Anhydriden umgesetzt werden. Die Carboxygruppen können, um eine bessere Wasserlöslichkeit zu erzielen, auch noch mit Alkanolaminen versalzt werden. Weiterhin können durch nachträgliche Acrylierung oder Methacrylierung an der Hydroxygruppen Produkte erhalten werden, die sich auch bei strahlenhärtenden Prozessen, wie UV- und Elektronenstrahlhärtung, fest in Lacksysteme einbauen lassen. Die Hydroxygruppen können auch durch ringöffnende Polymerisation mit Propiolacton, Caprolacton, Valerolacton oder Dodecalacton, sowie deren Derivaten verestert werden. Besonders bevorzugt erfolgt die ringöffnende Polymerisation mit Caprolacton. Dabei können sowohl Reinpolyester als auch Mischpolyester hergestellt werden. Bei Mischpolyestern kann die Veresterung blockweise, alternierend oder statistisch sein. Auch können die Mischpolyester einen Verteilungsgradienten in Bezug auf die Veresterung enthalten.

Gegenstand der Erfindung sind weiterhin die erfindungsgemäßen polyhydroxyfunktionelle Polysiloxane enthaltenden Beschichtungsmittel, polymeren Formmassen und Thermoplaste.

Die mit den erfindungsgemäßen polyhydroxyfunktionellen Polysiloxanen hergestellten Beschichtungsmittel, polymeren Formmassen und Thermoplaste können pigmentiert oder unpigmentiert eingesetzt werden, außerdem können die Beschichtungsmittel, polymeren Formmassen und Thermoplaste Füllstoffe wie Calciumcarbonat, Aluminiumhydroxid, verstärkende Fasern wie Glasfasern, C-Fasern und Aramidfasern enthalten. Des Weiteren können die mit den erfindungsgemäßen polyhydroxyfunktionellen Polysiloxanen hergestellten Beschichtungsmittel, polymeren Formmassen und Thermoplaste andere übliche Additive enthalten, wie beispielsweise Netz- und Dispergiermittel, Lichtschutzmittel, Alterungsschutzmittel und dergleichen.

Die mit den erfindungsgemäßen polyhydroxyfunktionellen Polysiloxanen hergestellten Beschichtungsmittel enthalten bevorzugt mindestens ein Bindemittel. Bei den mit den erfindungsgemäßen polyhydroxyfunktionellen Polysiloxanen hergestellten Beschichtungsmitteln handelt es sich bevorzugt um Beschichtungsmittel zur Herstellung von Antigraffitibeschichtungen, Trennbeschichtungen, selbstreinigenden Fassadenbeschichtungen, eisabweisenden Beschichtungen (beispielsweise für Flugzeuge), Beschichtungen für Autofelgen, schmutzabweisende Maschinen- und Gerätebeschichtungen, Bootsbeschichtungen (Antifoulingbeschichtungen), sowie schmutzabweisenden Möbel- und Trennpapierbeschichtungen. Bedingt durch die sehr gute Verträglichkeit der polyhydroxyfunktionellen Polysiloxane sind diese auch hervorragend zur Herstellung transparenter Beschichtungen geeignet.

Die erfindungsgemäßen Beschichtungsmittel und polymeren Formmassen enthalten die polyhydroxyfunktionellen Polysiloxane als Additiv in Mengen von 0,1 bis 10 Gew.-%, bevorzugt von 0,5 bis 7,5 Gew.-%, ganz besonders bevorzugt von 1 bis 5 Gew.-% bezogen auf den Feststoffgehalt des Beschichtungsmittels oder der polymeren Formmasse. Die polyhydroxyfunktionellen Polysiloxane werden bevorzugt als Lösung oder als Emulsionen den erfindungsgemäßen Beschichtungsmitteln oder polymeren Formmassen zugesetzt.

Die erfindungsgemäßen Thermoplaste enthalten die polyhydroxyfunktionellen Polysiloxane als Additiv in Mengen von 0,1 bis 5 Gew.-%, bevorzugt von 0,2 bis 2,0 Gew.-%, ganz besonders bevorzugt von 0,5 bis 1 Gew.-% bezogen auf den Feststoffgehalt des Thermoplasts. Die polyhydroxyfunktionellen Polysiloxane werden bevorzugt als Feststoff den erfindungsgemäßen Thermoplasten zugesetzt.

Die mit den erfindungsgemäßen polyhydroxyfunktionellen Polysiloxanen hergestellten Beschichtungsmittel können auf einer Vielzahl von Substraten aufgebracht werden, wie beispielsweise Holz, Papier, Glas, Keramik, Putz, Beton und Metall. Die Beschichtungen können auch im Mehrschichtverfahren auf Grundierungen, Füller oder Basislacken aufgebracht werden. Die Aushärtung der Beschichtungsmittel ist abhängig von der jeweiligen Art der Vernetzung und kann im weiten Temperaturbereich von beispielsweise -10°C bis 250°C erfolgen. Überraschenderweise zeigen die mit den erfindungsgemäßen polyhydroxyfunktionellen Polysiloxanen hergestellten Beschichtungsmittel auch bei Aushärtung bei Raumtemperatur sehr gute anti-adhäsive schmutzabweisende Eigenschaften. Weiterhin weisen die mit den erfindungsgemäßen polyhydroxyfunktionellen Polysiloxanen hergestellten Beschichtungsmittel gute antistatische Eigenschaften auf.

Auf Grund der außergewöhnlich guten Anti-Adhäsion der erfindungsgemäßen Beschichtungsmittel werden auch ölhaltige Substanzen wie beispielsweise Mineralöle, pflanzliche Öle, oder ölige Zubereitungen abgewiesen, so daß eine Restentleerung von entsprechend beschichteten ölhaltigen Gebinden möglich wird. Die so additivierten Beschichtungsmittel eignen sich demzufolge auch für Doseninnenbeschichtungen und Faßinnenlackierungen. Aufgrund der antistatischen Eigenschaften der entsprechend additivierten Beschichtungsmittel eignet sich ihr Einsatz immer dann, wenn nachteilige Effekte, die durch elektrostatische Aufladung entstehen, vermieden werden sollen.

Bei den mit den erfindungsgemäßen polyhydroxyfunktionellen Polysiloxanen hergestellten polymeren Formmassen handelt es sich bevorzugt um Lackharze, Alkydharze, Polyesterharze, Epoxidharze, Polyurethanharze, ungesättigte Polyesterharze, Epoxidharze Vinylesterharze, Polyethylen, Polypropylen, Polyamide, Polyethylentherephthalat, PVC, Polystyrol, Polyacrylnitril, Polybutadien, Polyvinylchlorid oder Mischungen aus diesen Polymeren.

Bei den mit den erfindungsgemäßen polyhydroxyfunktionellen Polysiloxanen hergestellten Thermoplasten handelt es sich um Poly(meth)acrylate, Polyacrylnitril, Polystyrol, styrolische Kunststoffe (z.B. ABS, SEBS, SBS), Polyester, Polyvinylester, Polycarbonate, Polyethylenterephthalat, Polybutylenterephthalat, Polyamide, thermoplastische Polyurethane (TPU), Polyvinylchlorid, Polyoxymethylen, Polyethylen, oder Polypropylen. Die Thermoplaste können gefüllt und/oder pigmentiert sein. Unter den Begriff "Thermoplaste" im Sinne der Erfindung fallen auch Mischungen (Blends) verschiedenartiger Thermoplaste. Bei den Thermoplasten kann es sich beispielsweise auch um dem Durchschnittsfachmann bekannte verspinnfähige thermoplastische Fasern handeln, wie beispielsweise Polyester- oder Polyamidfasern.

Die folgenden Beispiele erläutern die Erfindung, ohne beschränkend zu wirken:

### Ausgangsverbindung A: Herstellung eines unverzweigte Allyl-Polyethers

Der zu alkoxylierende Alkohol (z.B. Allylalkohol, Ethylenglykolmonoallylether) wird mit einem zur Alkoxylierung gebräuchlichen Katalysator in einen geeigneten Autoklaven überführt. Gebräuchliche Katalysatoren sind z.B. KOH oder NaOH. Gegebenenfalls wird unter Vakuum bei entsprechender Temperatur entwässert. Anschließend wird nach gründlicher Spülung mit Stickstoff bei einer Temperatur von ca.120-140°C die gewünschte Menge Oxid (z.B. Ethylenoxid oder Propylenoxid) derart zugegeben, dass der Druck im Reaktor max. 5 bar nicht übersteigt. Nach beendeter Zugabe der Oxid-Menge und anschließender Nachreaktionszeit wird eventuell vorhandenes nicht umgesetztes Alkylenoxid unter Vakuum entfernt. Anschließend wird das Produkt abgekühlt und mit einer geeigneten Säure, z.B. Essigsäure, der Katalysator neutralisiert, und gegebenenfalls das entstandene Salz abfiltriert.

### Ausgangsverbindungen B und B': Herstellung verzweigter Allyl-Polyglycidol-Polyether (mit und ohne linearen Polyether-Spacer)

Umsetzung eines Allylpolyethers mit der mittleren Durchschnittsformel Allyl-(EO)₄-H (Allyltetraethylenglykol) mit Glycidol (Verbindung B; Allylpolyether 6)

In einem 250-ml-4-Halskolben mit Rührer, Thermometer und Destillierbrücke werden bei Raumtemperatur 76,0 g Allyltetraethylenglykol und 1,82g Kalium-tert.-butylat vorgelegt, unter Stickstoffatmosphäre auf 90°C erwärmt und unter einem Vakuum von 60mbar 1Std. gerührt. Anschließend wird die Temperatur auf 110°C erhöht und mittels eines Tropftrichters 72,18 g Glycidol innerhalb von 3 Std zugetropft. Nach Beendigung der Zudosierung wird weitere 3 Std bei 110°C gerührt. Eine Kontrolle der Umsetzung über NMR ergab einen Umsetzungsgrad von 100%. Nach Abkühlung auf 50°C wird das Produkt über Ionentauscher neutralisiert.

### Umsetzung von 2-Propen-1-ol (Allylalkohol) mit Glycidol (Verbindung B')

Die Synthese der allylalkohol-gestarteten Polyglycidole wurde in der gleichen Art, wie bei den allylpolyether-gestarteten durchgeführt. Wegen des niedrigeren Siedepunkts von Allylalkohol gegenüber Allylpolyethern, ist es praktischer, mit Kalium- oder Natriumalkoholaten als Katalysator zu arbeiten (z. B. Kaliummethylat), da sich der freiwerdenden Alkohol (z.B. Methanol) wegen des niedrigeren Siedepunktes leichter entfernen läßt.

### Beispiel 1

### Umsetzung eines Methyl-Wasserstoff-Siloxans mit der mittleren Durchschnittsformel M^{H}D₂₂M^{H} und Allylpolyether 1

In einem 250-ml-3-Halskolben mit Rührer, Thermometer, Rückflußkühler werden bei Raumtemperatur 90,5 eines Methyl-Wasserstoff-Siloxans mit der mittleren Durchschnittsformel M^{H}D₂₂M^{H} und 40,80 g Allylpolyether 1 vorgelegt und 0,09 g Kaliumacetat-Lösung (10 Gew.%ig in Ethanol) unter Stickstoffatmosphäre auf 80°C erwärmt. Bei Erreichen dieser Temperatur werden 0,066 g Speiers's catalyst (6 Gew.%ige Lösung in Isopropanol) zugegeben. Die Temperatur wird auf 110°C erhöht und der Ansatz 120 Minuten bei diesen Bedingungen gehalten. Eine gasvolumetrische Bestimmung der verbleibenden Si-H-Gruppe ergibt einen Umsetzungsgrad von 100%.

### Beispiel 2

### Umsetzung eines Methyl-Wasserstoff-Siloxans mit der mittleren Durchschnittsformel M^{H}D₆₆D^{H}₂M^{H} und Allylpolyether RK und Allylpolyether 3

In einem 250-ml-3-Halskolben mit Rührer, Thermometer, Rückflußkühler werden bei Raumtemperatur 67,4 g eines Methyl-Wasserstoff-Siloxans mit der mittleren Durchschnittsformel M^{H}D₆₆D^{H}₂M^{H}, 31,4 g Allylpolyether RK und 21,1 g Allylpolyether 3 sowie 0,18 g Kaliumacetat-Lösung (10 Gew.% in Ethanol) und 80,0 g Dowanol PM vorgelegt und unter Stickstoffatmosphäre auf 80°C erwärmt. Bei Erreichen dieser Temperatur werden 0,042 g Speiers's catalyst (6 Gew.%ige Lösung in Isopropanol) zugegeben. Danach wird die Temperatur auf 100°C erhöht und 4 Stunden gehalten. Eine gasvolumetrische Bestimmung der verbleibenden Si-H-Gruppen ergibt eine vollständige Umsetzung.

### Beispiel 3

### Umsetzung eines Methyl-Wasserstoff-Siloxans mit der mittleren Durchschnittsformel M^{H}D₆₆D^{H}₂M^{H} und Allylpolyether RK und Allylpolyether 2

In einem 250-ml-3-Halskolben mit Rührer, Thermometer, Rückflußkühler werden bei Raumtemperatur 71,5 g eines Methyl-Wasserstoff-Siloxans mit der mittleren Durchschnittsformel M^{H}D₆₆D^{H}₂M^{H}, und 15,1 g Allylpolyether 2 sowie 0,18 g Kaliumacetat-Lösung (10 Gew.% in Ethanol) und 80,0g Dowanol PM vorgelegt, und unter Stickstoffatmosphäre auf 80°C erwärmt. Bei Erreichen dieser Temperatur werden 0,042g Speiers's catalyst (6%ige Lösung in Isopropanol) zugegeben. Danach wird die Temperatur auf 100°C erhöht und 0,5 Stunden gehalten. 33,3 g Allylpolyether RK werden zugegeben und weitere 3,5 Stunden bei 100°C gerührt. Eine gasvolumetrische Bestimmung der verbleibenden Si-H-Gruppe ergibt eine vollständige Umsetzung.

### Beispiel 4

### Umsetzung eines Methyl-Wasserstoff-Siloxans mit der mittleren Durchschnittsformel BuD₁₈M^{H} (hergestellt durch ringöffnende Polymerisation von D3) und Allylpolyether 6

In einem 250-ml-3-Halskolben mit Rührer, Thermometer, Rückflußkühler werden bei Raumtemperatur 108,9 g eines Methyl-Wasserstoff-Sitoxans mit der mittleren Durchschnittsformel BuD₁₈M^{H}, 41,1 g Allylpolyether 6, 50,0 g Dowanol PM und 0,3 g Kaliumacetat-Lösung (10 Gew.% in Ethanol) vorgelegt, und unter Stickstoffatmosphäre auf 80°C erwärmt. Bei Erreichen dieser Temperatur werden 0,045 g Speiers's catalyst (6 Gew.%ige Lösung in Isopropanol) zugegeben. Danach wird die Temperatur auf 100°C erhöht und 2 Stunden gehalten. Eine gasvolumetrische Bestimmung der verbleibenden Si-H-Gruppe ergibt nach Ablauf dieser Zeit eine vollständige Umsetzung.

### Beispiel 5

### Umsetzung eines Methyl-Wasserstoff-Siloxans mit der mittleren Durchschnittsformel M^{H}D₆₆D^{H}₂M^{H} und Allylpolyether RK und Allylpolyether 4

In einem 250-ml-3-Halskolben mit Rührer, Thermometer, Rückflußkühler werden bei Raumtemperatur 69,8 g eines Methyl-Wasserstoff-Siloxans mit der mittleren Durchschnittsformel M^{H}D₆₆D^{H}₂M^{H}, 17,6 g Allylpolyether 4, 0,18g Kaliumacetat-Lösung (10 Gew.% in Ethanol) und 80,0 g Dowanol PM vorgelegt und unter Stickstoffatmosphäre auf 80°C erwärmt. Bei Erreichen dieser Temperatur werden 0,042 g Speiers's catalyst (6 Gew.%ige Lösung in Isopropanol) zugegeben. Danach wird die Temperatur auf 100°C erhöht und 0,5 Stunden gehalten. 32,5 g Allylpolyether RK werden zugegeben und weitere 4,5 Stunden bei 100°C gerührt. Eine gasvolumetrische Bestimmung der verbleibenden Si-H-Gruppe ergibt einen Umsetzungsgrad von 100%.

### Beispiel 6

### Umsetzung eines Methyl-Wasserstoff-Siloxans mit der mittleren Durchschnittsformel M^{H}D₆₆D^{H}₂M^{H} und Allylpolyether RK und Allylpolyether 5

In einem 250-ml-3-Halskolben mit Rührer, Thermometer, Rückflußkühler werden bei Raumtemperatur 64,2 g eines Methyl-Wasserstoff-Siloxans mit der mittleren Durchschnittsformel M^{H}D₆₆D^{H}₂M^{H} , 25,7 g Allylpolyether 5 0,18 g Kaliumacetat-Lösung (10 Gew.% in Ethanol) und 80,0 g Dowanol PM vorgelegt und unter Stickstoffatmosphäre auf 80°C erwärmt. Bei Erreichen dieser Temperatur werden 0,042 g Speiers's catalyst (6 Gew.%ige Lösung in Isopropanol) zugegeben. Danach wird die Temperatur auf 100°C erhöht und 0,5 Stunden gehalten. 29,9 g Allylpolyether RK werden zugegeben und weitere 4,5 Stunden bei 100°C gerührt. Eine gasvolumetrische Bestimmung der verbleibenden Si-H-Gruppe ergibt einen Umsetzungsgrad von 100%.

### Beispiel 7

### Umsetzung eines Methyl-Wasserstoff-Siloxans mit der mittleren Durchschnittsformel M^{H}D₇₅M^{H} und Allylpolyether 6

In einem 250-ml-3-Halskolben mit Rührer, Thermometer, Rückflußkühler werden bei Raumtemperatur 125,0 g eines Methyl-Wasserstoff-Siloxans mit der mittleren Durchschnittsformel M^{H}D₇₅M^{H}, 25,0 g Allylpolyether 6, 0,3 g Kaliumacetat-Lösung (10 Gew.% in Ethanol) und 50,0 g Dowanol PM vorgelegt und unter Stickstoffatmosphäre auf 80°C erwärmt. Bei Erreichen dieser Temperatur werden 0,045 g Speiers's catalyst (6 Gew.%ige Lösung in Isopropanol) zugegeben. Danach wird die Temperatur auf 100°C erhöht und 3 Stunden gehalten. Eine gasvolumetrische Bestimmung der verbleibenden Si-H-Gruppe ergibt einen Umsetzungsgrad von 100%.

### Beispiel 8

### Umsetzung eines Methyl-Wasserstoff-Siloxans mit der mittleren Durchschnittsformel BuD₆₈M^{H} (hergestellt durch Ringöffnende Polymerisation von D3) und Allylpolyether 3

In einem 250-ml-3-Halskolben mit Rührer, Thermometer, Rückflußkühler werden bei Raumtemperatur 116,7 g eines Methyl-Wasserstoff-Siloxans mit der mittleren Durchschnittsformel BuD₆₈M^{H}, 13,3 g Allylpolyether 3, 0,26 g Kaliumacetat-Lösung (10 Gew.% in Ethanol) und 70,0 g Toluol vorgelegt und unter Stickstoffatmosphäre auf 80°C erwärmt. Bei Erreichen dieser Temperatur werden 0,039 g Speiers's catalyst (6 Gew.%ige Lösung in Isopropanol) zugegeben. Danach wird die Temperatur auf 100°C erhöht und 2 Stunden gehalten. Eine gasvolumetrische Bestimmung der verbleibenden Si-H-Gruppe ergibt einen Umsetzungsgrad von 100%.

### Beispiel 9

### Umsetzung eines Methyl-Wasserstoff-Siloxans mit der mittleren Durchschnittsformel M^{H}D₄₆M^{H} und Allylpolyether 2

In einem 250-ml-3-Halskolben mit Rührer, Thermometer, Rückflußkühler werden bei Raumtemperatur 100,9 g eines Methyl-Wasserstoff-Siloxans mit der mittleren Durchschnittsformel M^{H}D₄₆M^{H}, 29,1 g Allylpolyether 2, 0,26 g Kaliumacetat-Lösung (10 Gew.% in Ethanol) und 70,0 g Toluol vorgelegt und unter Stickstoffatmosphäre auf 80°C erwärmt. Bei Erreichen dieser Temperatur werden 0,039 g Speiers's catalyst (6 Gew.%ige Lösung in Isopropanol) zugegeben. Danach wird die Temperatur auf 100°C erhöht und 2 Stunden gehalten. Eine gasvolumetrische Bestimmung der verbleibenden Si-H-Gruppe ergibt einen Umsetzungsgrad von 100%.

### Beispiel 10

### Umsetzung eines Methyl-Wasserstoff-Siloxans mit der mittleren Durchschnittsformel M^{H}D₆₆D^{H}₂M^{H} und Allylpolyether 8

In einem 250-ml-3-Halskolben mit Rührer, Thermometer, Rückflußkühler werden bei Raumtemperatur 72,5 g eines Methyl-Wasserstoff-Siloxans mit der mittleren Durchschnittsformel M^{H}D₆₆D^{H}₂M^{H} und 57,5 g Allylpolyether 8, sowie 0,19 g Kaliumacetat-Lösung (10 Gew.% in Ethanol) und 43,3 g Dowanol PM vorgelegt, und unter Stickstoffatmosphäre auf 80°C erwärmt. Bei Erreichen dieser Temperatur werden 0,045 g Speiers's catalyst (6 Gew.%ige Lösung in Isopropanol) zugegeben. Danach wird die Temperatur auf 100°C erhöht und 2 Stunden gehalten. Eine gasvolumetrische Bestimmung der verbleibenden Si-H-Gruppen ergibt eine vollständige Umsetzung.

### Beispiel 11

### Umsetzung eines Methyl-Wasserstoff-Siloxans mit der mittleren Durchschnittsformel M^{H}D₆₆D^{H}₂M^{H} und Allylpolyether 7

In einem 250-ml-3-Halskolben mit Rührer, Thermometer, Rückflußkühler werden bei Raumtemperatur 84,6 g eines Methyl-Wasserstoff-Siloxans mit der mittleren Durchschnittsformel M^{H}D₆₆D^{H}₂M^{H} und 45,4 g Allylpolyether 7, sowie 0,19 g Kaliumacetat-Lösung (10 Gew.% in Ethanol) und 43,3 g Dowanol PM vorgelegt, und unter Stickstoffatmosphäre auf 80°C erwärmt. Bei Erreichen dieser Temperatur werden 0,045 g Speiers's catalyst (6 Gew.%ige Lösung in Isopropanol) zugegeben. Danach wird die Temperatur auf 100°C erhöht und 2 Stunden gehalten. Eine gasvolumetrische Bestimmung der verbleibenden Si-H-Gruppen ergibt eine vollständige Umsetzung.

### Legende:

Für die oben angegebenen Methyl-Wasserstoff-Siloxane bestimmen sich die Bedeutungen der angeführten Abkürzungen wie folgt:

| | |
|---|---|
| M | = -O_{0,5}Si(CH₃)₃ |
| M^{H} | = -O_{0,5}SiH(CH₃)₂ |
| D | = -O_{0,5}Si(CH₃)₂O_{0,5}- |
| D^{H} | = -O_{0,5}SiH(CH₃)O_{0,5}- |
| D3 | = Hexamethylcyclotrisiloxan |
| Bu | = butyl- |

Weiterhin verwendete Abkürzungen:
Allylpolyether 1 =
   Allylalkohol mit durchschnittlich 3,3 Mol Glycidol
   OH-Zahl = 791 mg KOH/g
   lodzahl = 84,1 g l₂/100g
Allylpolyether 2 =
   Allylglykol mit durchschnittlich 3,4 Mol Glycidol
   OH-Zahl = 704 mg KOH/g
   lodzahl = 72,6 g l₂/100g
Allylpolyether 3 =
   Allylglykol mit durchschnittlich 7,4 Mol Glycidol
   OH-Zahl = 730 mg KOH/g
   lodzahl = 38,9 g l₂/100g
Allylpolyether 4 =
   Allylalkohol mit durchschnittlich 6,4 Mol Glycidol
   OH-Zahl = 766.8 mg KOH/g
   lodzahl = 48.3 g l₂/100g
Allylpotyether 5 =
   Allylalkohol mit durchschnittlich 10,7 Mol Glycidol
   OH-Zahl = 764.3 mg KOH/g
   lodzahl = 30.4 g l₂/100g
Allylpolyether 6 =
   Allyltetraethylenglykol mit durchschnittlich 3,2 Mol Glycidol
   OH-Zahl = 502 mg KOH/g
   lodzahl = 52,6 g l₂/100g
Allylpolyether 7 =
   Allylalkohol mit durchschnittlich 4 Mol Glycidol ethoxyliert mit 5 Mol EO
   (1 Mol EO pro OH -Gruppe)
   OH-Zahl = 522 mg KOH/g
   lodzahl = 45 g l₂/100g
Allylpolyether 8 =
   Allylalkohol mit durchschnittlich 4 Mol Glycidol ethoxyliert mit 10 Mol EO
   ( 2 Mol EO pro OH -Gruppe)
   OH-Zahl = 426 mg KOH/g
   lodzahl = 30,5 g l₂/100g
Allylpolyether RK =
   Unverzweigter Allylpolyether, Allylalkohol-gestarteter Ethylenoxid-Propylenoxid-Polyether mit 75 mol% Ethylenoxid und 25 mol-% Propylenoxid, Molekulargewicht ca. 750 g/mol
   OH-Zahl = 74,5 mg KOH/g
   lodzahl = 30,5 g l/100 g
Speiers's Katalyst = H₂[PtCl₆], 6 H₂O
Dowanol PM = 1-Methoxy-2-propanol

### Anwendungstechnische Prüfungen der erfindungsgemäßen polyhydroxyfunktionellen Polysiloxane:

Die anwendungstechnische Prüfung der erfindungsgemäßen polyhydroxyfunktionellen Polysiloxane erfolgte in mehreren Lacksystemen.

### Wäßriges 2-Komponenten System auf Basis Bayhydrol VP LS 2235/Bayhydur 3100

### Komponente 1 (Stammlack):

| | |
|---|---|
| Bayhydrol VP LS 2235 ¹⁾ | 70,90 |
| BYK-011 ²⁾ | 1,40 |
| Wasser | 1,10 |

Die Mischung wird durch Rühren homogenisiert.

### Komponente 2 (Härter):

| | |
|---|---|
| Bayhydur 3100 ³⁾ | 22,00 |
| Dowanol PMA | 4,60 |

Die Mischung wird durch Rühren homogenisiert.
1) Polyacrylat-Dispersion, Bayer Material Science AG, D-Leverkusen
2) Entschäumer, BYK-Chemie GmbH, D-Wesel
3) Isocyanat-basierte Härterkomponente, Bayer Material Science AG, D-Leverkusen

Stammlack und Härterlösung werden unabhängig voneinander hergestellt. Die erfindungsgemäßen Additive und die Vergleichsprodukte werden in den Stammlack in einer Konzentration von 1 Gew.-% Wirksubstanz bezogen auf den Gesamtlack eingerührt.

Kurz vor der Applikation werden Stammlack und Härterlösung im Verhältnis 100:36,2 gemischt. Die Viskosität wird durch Zugabe von Wasser auf eine Auslaufzeit von 30 Sekunden im DIN 4 mm Becher eingestellt.

Nach der Einarbeitung werden die additivierten Lacke in einem 100µm-Nassfilm mit einem Spiralrakel auf ein geprimertes Alublech aufgezogen. Danach werden die Bleche 60 Stunden bei Raumtemperatur getrocknet. Die getrockneten Bleche werden danach den unten angegebenen Tests unterzogen.

### Wasserverdünnbares Acrylat/Melamin-Einbrennsystems auf Basis Neocryl XK101 und Cymel 303

| | |
|---|---|
| Neocryl XK 101 ⁴⁾ | 78,90 |
| Wasser | 6,20 |
| Cymel 303 ⁵⁾ | 8,30 |
| NMP | 6,20 |
| DMEA | 0,40 |

| | |
|---|---|
| ⁴⁾ Acrylat-Emusion, DSM Neoresins, NL-Waalwijk ⁵⁾ Vernetzer, Cytec Industries Inc., USA-West Paterson, NJ | |

Alle Komponenten werden gemischt und 10 Minuten mit einem Dissolver bei einer Umfangsgeschwindigkeit von 5 m/s homogenisiert. Die zu prüfenden Additive werden 10 Minuten mit einem Scandex-Rüttler in einer Konzentration von 1% Wirksubstanz in den Lack eingearbeitet.

Nach der Einarbeitung werden die additivierten Lacke in einem 100µm-Nassfilm mit einem Spiralrakel auf ein geprimertes Alublech aufgezogen. Nach einer Ablüftzeit von 30 Minuten bei Raumtemperatur werden die Bleche 30 Minuten bei 130°C im Umluftofen eingebrannt

Die erhaltenen Lackfilme werden hinsichtlich ihrer schmutz-, wasser- und ölabweisenden Wirkung nach folgenden Kriterien beurteilt:

### Edding-Test:

Es wird mit einem Permanent-Marker der Type "Edding 400" die Lackoberfläche beschriftet und visuell beurteilt, ob die Oberfläche beschreibbar ist. Es wird beurteilt, ob die Tinte auf der Oberfläche spreitet oder sich zusammenzieht. Nach dem Trocknen der Tinte wird versucht, diese mit einem trockenen Tuch abzuwischen.

### Bewertung: 1 - 5

- 1 =: Tinte zieht sich zusammen, läßt sich restlos mit einem Papiertuch entfernen
- 5 =: Tinte spreitet sehr gut auf Untergrund, läßt sich praktisch nicht entfernen

### Bitumen-Test:

Bitumen wird erhitzt, bis er so weit verflüssigt ist, dass er sich auf die Lackoberfläche aufbringen läßt. Nach Abkühlen der Masse wird visuell beurteilt, wie gut sich die Bitumenmasse von der Oberfläche wieder rückstandsfrei manuell ablösen läßt.

### Bewertung: 1 - 5:

- 1 =: Bitumen läßt sich leicht und restlos entfernen
- 5 =: Bitumen haftet fest auf der Oberfläche und läßt sich praktisch nicht entfernen

### Verschmutzung mit Bayferrox-Pulver:

Auf die Lackoberfläche werden 3 Löffel Bayferrox 130M, Eisenoxid-Pigment, Bayer AG, gestreut und mit dest. Wasser in 5 Spritzgängen mit Hilfe einer Spritzflasche wieder abgespült. Die möglichst rückstandsfreie Oberfläche wird visuell beurteilt.

### Bewertung: 1 - 5:

- 1 =: Bayferrox-Pulver läßt sich rückstandslos mit Wasser abwaschen
- 5 =: kein Reinigungseffekt beim Abspülen mit Wasser, ein großer roter Fleck verbleibt

### Wasser-Ablauftest:

Es wird ein Tropfen Wasser auf die Oberfläche gegeben. Anschließend wird die beschichtete Lackoberfläche gekippt, bis der Tropfen abläuft. Es wird visuell beurteilt, bei welchem Winkel der Tropfen abläuft und ob der Tropfen rückstandsfrei abläuft.

### Bewertung: 1 - 5:

- 1 =: geringer Winkel genügt und der Tropfen läuft komplett ohne Nasenbildung und Rückstandströpfchen ab
- 5 =: Lackblech muß stark geneigt werden bis der Tropfen abläuft, eventuell bleiben Wasserreste auf der Lackoberfläche zurück

### Mineralöl-Ablauftest:

Es wird ein Tropfen handelsübliches Mineralöl auf die Lackoberfläche gegeben. Anschließend wird die beschichtete Lackoberfläche gekippt, bis der Tropfen etwa 10 cm gelaufen ist. Nach Ablauf von 5 Minuten wird die Ölspur bzw. eine erneute Tropfenbildung visuell bewertet.

### Bewertung: 1 - 5:

- 1 =: Die Ölspur bildet sich sofort in einzelne Tropfen zurück
- 5 =: Die Ölspur bildet sich nicht zurück, sondern spreitet eventuell weiter

### Wäßriges 2-Komponenten System auf Basis Bayhydrol VP LS 2235/Bayhydur 3100:

| | Öl | Wasser | Bitumen | Edding | Edding (nach Wischen) |
|---|---|---|---|---|---|
| Nullprobe | 5 | 4 | 5 | 5 | 5 |
| Beispiel 1 | 3 | 1 | 1 | 3 | 2 |
| Beispiel 2 | 1 | 1 | 1 | 1 | 1 |
| Beispiel 3 | 1 | 1 | 1 | 1 | 1 |
| Beispiel 4 | 1 | 1 | 1 | 1 | 1 |
| Beispiel 7 | 2 | 1 | 1 | 1 | 1 |
| Tego Protect 5100 | 1 | 2 | 1 | 4 | 2 |
| Worlee Add 720 | 3 | 2 | 3 | 5 | 5 |

Worlee Add 720: modifiziertes Phenoldimethylsiloxan zur Herstellung von wässrigen sowie lösemittelhaltigen Antigraffitibeschichtungen (Worlee-Chemie, D-Hamburg)

### Wasserverdünnbares Acrylat/Melamin-Einbrennsystems auf Basis Neocryl XK101 und Cymel 303:

| | Bayferrox | Öl | Wasser | Bitumen | Edding | Edding (nach Wischen) |
|---|---|---|---|---|---|---|
| Nullprobe | 3 | 5 | 4 | 5 | 5 | 5 |
| Beispiel 1 | 1 | 1 | 1 | 1 | 3 | 1 |
| Beispiel 2 | 1 | 1 | 1 | 1 | 3 | 1 |
| Beispiel 3 | 2 | 1 | 1 | 1 | 1 | 1 |
| Beispiel 5 | 1 | 1 | 1 | 1 | 1 | 1 |
| Beispiel 6 | 1 | 1 | 1 | 1 | 1 | 1 |
| Beispiel 10 | 1 | 1 | 1 | 1 | 1 | 1 |
| Beispiel 11 | 1 | 1 | 1 | 1 | 1 | 1 |
| Worlee Add 720 | 5 | 2 | 2 | 1 | 1 | 2 |

Worlee Add 720: modifiziertes Phenoldimethylsiloxan zur Herstellung von wässrigen sowie lösemittelhaltigen Antigraffitibeschichtungen, 50%ige Lösung in Lösemittelgemisch, (Worlee-Chemie, D-Hamburg)

### Anwendungstechnische Prüfung der erfindungsgemäßen polyhydroxyfunktionellen Polysiloxane in polymeren Formmassen

Von dem polyhydroxy-funktionellen Polysiloxan aus Beispielen 2 ,5 und 9 wird eine 50%ige Lösung in 1-Methoxy-2-propanol hergestellt. Diese Polysiloxanlösung wird entsprechend der nachfolgenden Tabelle zu den polymeren Formmassen A und B (= Gel-Coat Mischung A und Gel-Coat Mischung B) umgesetzt.

### Rezeptur des Gel-Coats:

| | |
|---|---|
| Palatal 400-01 | 84,75%, Polyesterharz, DSM Resins |
| Aerosil 200 | 1,25%, Pyrogene Kieselsäure, Degussa |
| Tronox R-KB-2 | 10,00%, Titandioxid, Tronox |
| Beschleuniger NL-49 P | 1,00%, Cobalt-octoat, 1%ig, Akzo Nobel |
| Styrol | 8,00% |

Palatal 400-01, Tronox R-KB-2 und Aerosil 200 werden mit einem Dissolver fünf Minuten bei etwa 2800 Upm vorgemischt. Danach wird vor Verwendung der Beschleuniger NL49 P, das Styrol bei 900 Upm zugemischt. Bei Gel-Coat Mischung A wird zusätzlich noch die Polysiloxanlösung aus Beispiel 3 zugegeben.

Rezeptur (in Gewichtsprozent) für die getesteten Gel-Coat-Mischungen:

| | Gel-Coat Mischung A | Gel-Coat Mischung B |
|---|---|---|
| Gel-Coat | 98,5 | 98 |
| Beschleuniger NL-49 P | 1 | 2 |
| Polysiloxanlösung aus Beispiel 2 | 0,5 | 0 |
| Polysiloxanlösung aus Beispiel 5 | 0,5 | 0 |
| Polysiloxanlösung aus Beispiel 9 | 0,5 | 0 |

Die anti-adhäsiven Eigenschaften dieser Gel-Coat-Mischungen werden durch die Haftung dieser Gel-Coats auf Glasplatten bestimmt. Dazu werden zunächst Glasplatten der Größe 40 x 10 x 0,05 cm durch Abwaschen mit Ethylacetat gründlich entfettet.

Anschließend werden die Gel-Coat-Mischung A und B mit einem Rahmenrakel (750 µm Spalt) auf die Glasplatte aufgebracht Man läßt alle Gel-Coats über Nacht bei Raumtemperatur aushärten. Nach der Aushärtung wird der Gelcoat mit Hilfe eines Teppichmessers von der Platte entfernt.

### Ergebnis

Gel-Coat-Mischung B läßt sich nicht von der Glasplatte entfernen. Die mit einem internen Trennmittel ausgerüstete Gel-Coat-Mischung A läßt sich von der gereinigten Glasplatten leicht entfernen. Die Oberfläche der mit einem internen Trennmittel ausgerüsteten Gel-Coat-Mischung A der gereinigten Glasplatte ist absolut glatt und zeigt einen hohen Glanz.

### Anwendungstechnische Prüfung der erfindungsgemäßen polyhydroxyfunktionellen Polysiloxane in Thermoplasten

In je 100 g einer 10 %igen Lösung aus Polymethylmethacrylat in n-Ethylacetat wurden je 0,05 g der Produkte aus Beispiel 2, 5, 8 und 9 aufgelöst. Auf einer 100 x 250 mm großen Glasplatte wurde je ein 200 µm starker Film hergestellt. Nach Entfernung des Lösemittels resultierte eine Beschichtung mit einer Schichtdicke von ca. 20 µm. Als Vergleichsprobe diente eine entsprechende Beschichtung auf Glas ohne Additiv. Zur Messung des Gleitwiderstandes wurde ein elektrisches Filmaufziehgerät mit konstantem Vorschub verwendet. Auf der Halterung für das Filmaufziehgerät wurde ein Zugdruck-Kraftaufnehmer befestigt, der über einen Computer jeden Widerstand, der dem Gleitkörper entgegensteht, aufzeichnet. Der Gleitkörper wird in Zugrichtung über die zu messende Oberfläche bewegt. Als Gleitkörper wurde ein 500 g Gewichtsstein mit einer definierten Filzunterlage verwendet.

Die Beurteilung der Transparenz/Eintrübung der Beschichtung wurde rein visuell vorgenommen.

| Probe | Prozentuale Reduktion des Reibungskoeffizienten | Transparenz |
|---|---|---|
| Nullprobe ohne Additiv | - | transparent |
| Beispiel 2 | 71% | transparent |
| Beispiel 5 | 66% | transparent |
| Beispiel 8 | 76% | transparent |
| Beispiel 9 | 71% | transparent |

## Patentansprüche

1. Verfahren zur Herstellung Polyhydroxyfunktioneller, verzweigte Polyglycidol-Polyether-Reste enthaltender Polysiloxane der allgemeinen Formel 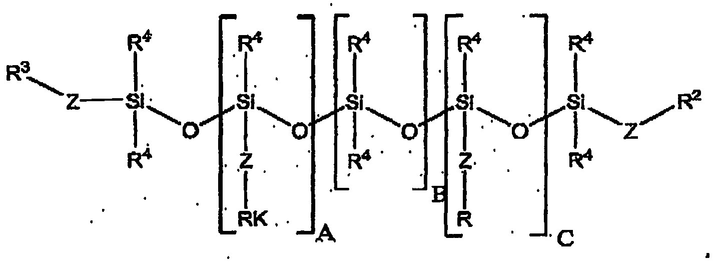 wobei gilt
Z = C₁-C₁₄-Alkylen,
RK = unverzweigter Polyetherrest aus Alkylenoxid-Einheiten mit 1-6 Kohlenstoffatomen, und/oder aliphatischer und/oder cycloaliphatischer und/oder aromatischer Polyesterrest mit einem gewichtsmittieren Molekulargewicht zwischen 200 und 4000 g/mol
R = polyhydroxyfunktioneller verzweigter Polyglycldol-Polyetherrest, der aus einer verzweigten Polyglycidolgruppe besteht oder diese enthält,
R² und R³ unabhängig voneinander für
C₁-C₁₄-Alkyl, -Aryl oder Aralkyl, -O(C₁-C₁₄-Alkyl, -Aryl oder -Aralkyl), -OCO(C₁-C₁₄-Alkyl, -Aryl oder -Aralkyl), -O-CO-O(C₁-C₁₄-Alkyl -Aryl oder -Aralkyl), -OSO₂(C₁-C₁₄-Alkyl, -Aryl oder -Aralkyl), -H, -Cl, -F, -OH, -R, -RK stehen,
R⁴ = C₁-C₁₄-Alkyl, -Aryl oder -Aralkyl,
A = 0 - 20, bevorzugt 1-15, besonders bevorzugt 1 - 8,
B = 2 - 300, bevorzugt 10 - 200, besonders bevorzugt 15 -100 und
C = 0 - 20, bevorzugt 1 - 15, besonders bevorzugte 1 - 8 ist;
wobei für C = 0 gilt dass R³ = R und/oder R² = R ist,
**dadurch gekennzeichnet, dass** zunächst mindestens eine allylische oder methallylische Startverbindung mit mindestens einem Glycidol oder Glycidolcarbonat so umgesetzt wird, dass ein mit einem oder mehreren verzweigten Polyglycidol-Resten modifizierter Allylpolyether oder Methallylpolyether gebildet wird, und dann der oder die so hergestellten Allylpolyether oder Methallylpolyether in Gegenwart eines Säure puffernden Agens an ein Si-H-funktionelles Alkyl-Polysiloxan addiert, werden.

2. Verfahren nach Anspruch 1, wobei die allylische oder methallylische Startverbiridung gewählt ist aus der Gruppe bestehend aus Allylalkohol, Methallylalkohol, einem alkoxylietten Allylalkohol oder Methallylalkohol, einem mit einem Di- oder Polyol veretherten Allylalkohol oder Methallylalkohol.

3. Verfahren nach Anspruch 2, wobei der alkoxylierte Allylalkohol oder Methallylalkohol ein ethoxylierter, propoxylierter oder butoxylierter oder gemischt ethoxylierter und propoxylierter Allylalkohol oder Methallylalkohol ist und das Diol. oder Polyol gewählt ist aus der Gruppe bestehend aus di- oder polyhydroxylierten Ethern, Estern, Polyethern oder Polyestern.

4. Verfahren nach einem der Ansprüche 1 bis 3, **dadurch gekennzeichnet, dass** nachfolgende unverzweigte Allylpolyether, Methallylpolyether, Allylpolyester und/oder Methallylpolyester an das Polysiloxan addiert werden.

5. Verfahren nach einem der Ansprüche 1 bis 3, **dadurch gekennzeichnet, dass** unverzweigte Allylpolyether, Methallylpolyether, Allylpolyester und/oder Methallylpolyester im Gemisch mit, vor oder nach dem verzweigten Allylpolyethern und/oder Methallylpolyethern an das Polysiloxan addiert werden.

6. Verfahren nach einem oder mehreren der Ansprüche 1 bis 5, wobei die Addition der Allylpolyether oder Methallylpolyether an das Si-H-funktionelle Alkyl-Polysiloxan in Gegenwart eines Lösungsmittel durchgeführt wird, welches eine homogene Lösung sowohl der Allylpolyether oder Methallylpolyether als auch des Si-H-funktionellen Alkyl-Polysiloxans in der Reaktionsmischung erlaubt.

7. Verfahren zur Herstellung von verzweigte Polyglycidol-Polyether-Reste enthaltenden Polysiloxanen, **dadurch gekennzeichnet, dass** die nach den Verfahren der Ansprüche 1 bis 6 erhaltenen polyhydroxyfunktionellen Polysiloxane durch Alkoxylierung, Veresterung, Veretherung und/oder Urethanbildung, zumindest eines Teils der Hydroxygruppen, modifiziert werden.

8. Polysiloxan, **gekennzeichnet dadurch, dass** es erhältlich nach einem oder mehreren der Ansprüche 1 bis 7.

9. Polysiloxan nach Anspruch 8, **dadurch gekennzeichnet, dass** der mindestens eine verzweigte polyhydroxyfunktionelle Allylpolyether oder Methallylpolyether eine dendritische Struktur aufweist.

10. Polysiloxan nach Anspruch 8 oder 9, **dadurch gekennzeichnet, dass** es sich bei dem Alkyl-Polysiloxan um ein Methyl-Wasserstoff-Polysiloxan handelt.

11. Polysiloxan nach Anspruch 8, **dadurch gekennzeichnet, dass** es aus 10 bis 100 Siloxaneinheiten, bevorzugt aus 20 bis 80 Siloxaneinheiten, besonders bevorzugt aus 30 bis 70 Siloxaneinheiten besteht.

12. Polysiloxan nach Anspruch 8 oder 11, wobei A und C gleich 0 sind und mindestens eine der Gruppen R² oder R³ für einen Rest R stehen.

13. Polysiloxan nach Anspruch 8 oder 11, wobei exakt eine der Gruppen R² oder R³ für einen Rest R steht.

14. Verwendung eines Polysiloxans nach einem der Ansprüche 8 bis 13 oder hergestellt nach einem der Verfahren nach Ansprüchen 1 bis 7 als Additiv in Beschichtungsmitteln, polymeren Formmassen oder Thermoplasten.

15. Beschichtungsmittel, polymere Formmasse oder Thermoplast, enthaltend ein Polysiloxan nach einem der Ansprüche 8 bis 13 oder hergestellt nach einem der Verfahren nach Ansprüchen 1 bis 7.

16. Beschichtungsm ittel oder polymere Formmasse, enthaltend 0,1 -10 Gew.-%, bevorzugt 0,5 - 7,5 Gew.-%, besonders bevorzugt 1 - 5 Gew.-% eines Polysiloxans nach einem der Ansprüche 8 bis 13 oder hergestellt nach einem der Verfahren nach Ansprüchen 1 bis 7.

17. Thermoplast, enthaltend 0,1 - 5 Gew.-%, bevorzugt 0,2 - 2 Gew.-%, besonders bevorzugt 0,5 - 1 Gew.-% eines nach einem der Ansprüche 8 bis 13 oder hergestellt nach einem der Verfahren nach Ansprüchen 1 bis 7.

## Claims

1. Process for preparing polyhydroxy-functional polysiloxanes comprising branched polyglycidol polyether radicals of the general formula 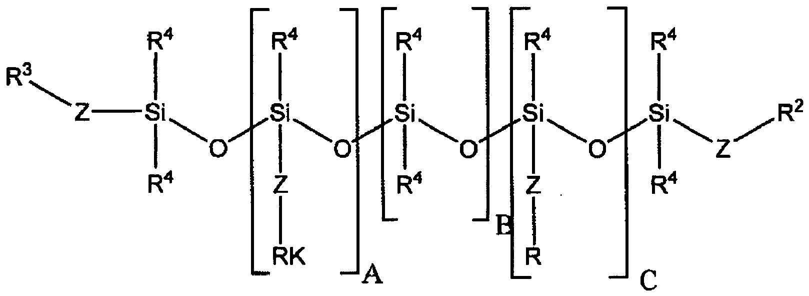 where
Z = C₁-C₁₄ alkylene,
RK = unbranched polyether radical composed of alkylene oxide units having 1-6 carbon atoms, and/or aliphatic and/or cycloaliphatic and/or aromatic polyester radical having a weight-average molecular weight of between 200 and 4000 g/mol,
R = polyhydroxy-functional branched polyglycidol polyether radical, which consists of a branched polyglycidol group or contains the latter,
R² and R³ independently of one another are C₁-C₁₄ alkyl aryl or aralkyl, -O(C₁-C₁₄ alkyl, aryl or aralkyl), -OCO(C₁-C₁₄ alkyl, aryl or aralkyl), -O-CO-O(C₁-C₁₄ alkyl, aryl or aralkyl), -OSO₂(C₁-C₁₄ alkyl, aryl or aralkyl), -H, -Cl, -F, -OH, -R, -RK,
R⁴ = C₁-C₁₄ alkyl, aryl or aralkyl,
A = 0 - 20, preferably 1 - 15, more preferably 1 - 8,
B - 2 - 300, preferably 10 - 200, more preferably 15 - 100 and
C = 0 - 20, preferably 1 - 15, more preferably 1 - 8;
and if C = 0 then R³ = R and/or R² = R,
**characterized in that** first at least one allylic or methallylic starter compound is reacted with at least one glycidol or glycidol carbonate such that an allyl polyether or methallyl polyether modified with one or more branched polyglycidol radicals is formed, and then the allyl polyether or polyethers or methallyl polyether or polyethers thus prepared is or are subjected to addition reaction with an Si-H-functional alkyl polysiloxane in the presence of an acid-buffering agent.

2. Process according to claim 1, where the allylic or methallylic starter compound is selected from the group consisting of allyl alcohol, methallyl alcohol, an alkoxylated allyl alcohol or methallyl alcohol, and an allyl alcohol or methallyl alcohol etherified with a diol or polyol.

3. Process according to claim 2, where the alkoxylated allyl alcohol or methallyl alcohol is an ethoxylated, propoxylated or butoxylated or mixedly ethoxylated and propoxylated allyl alcohol or methallyl alcohol, and the diol or polyol is selected from the group consisting of dihydroxylated and polyhydroxylated ethers, esters, polyethers and polyesters.

4. Process according to one of Claims 1 to 3, **characterized in that** subsequently unbranched allyl polyethers, methallyl polyethers, allyl polyesters and/or methallyl polyesters are subjected to addition reaction with the polysiloxane.

5. Process according to one of Claims 1 to 3, **characterized in that** unbranched allyl polyethers, methallyl polyethers, allyl polyesters and/or methallyl polyesters in a mixture with, before or after the branched allyl polyethers and/or methallyl polyesters are subjected to addition reaction with the polysiloxane.

6. Process according to one or more of claims 1 to 5, where the addition reaction of the allyl polyethers or methallyl polyethers with the Si-H-functional alkyl-polysiloxane is carried out in the presence of a solvent which allows homogeneous dissolution both of the allyl polyethers or methallyl polyethers and of the Si-H-functional alkyl-polysiloxane in the reaction mixture.

7. Process for preparing branched polysiloxanes comprising polyglycidol-polyether radicals, **characterized in that** the polyhydroxy-functional polysiloxanes obtained by the processes of claims 1 to 6 are modified by alkoxylation, esterification, etherification and/or urethanization of at least some of the hydroxyl groups.

8. Polysiloxane **characterized in that** it is obtainable according to one or more of claims 1 to 7.

9. Polysiloxane according to Claim 8, **characterized in that** the at least one branched polyhydroxy-functional allyl polyether or methallyl polyether has a dendritic structure.

10. Polysiloxane according to Claim 8 or 9, **characterized in that** the alkylpolysiloxane is a methylhydropolysiloxane.

11. Polysiloxane according to Claim 8, **characterized in that** it is composed of 10 to 100 siloxane units, preferably of 20 to 80 siloxane units, more preferably of 30 to 70 siloxane units.

12. Polysiloxane according to Claim 8 or 11, A and C being 0, and at least one of the groups R² and R³ being a radical R.

13. Polysiloxane according to Claim 8 or 11, exactly one of the groups R² and R³ being a radical R.

14. Use of a polysiloxane according to one of Claims 8 to 13 or prepared according to a process according to Claims 1 to 7 as an additive in coating compositions, polymeric moulding compounds or thermoplastics.

15. Coating composition, polymeric moulding compound or thermoplastic comprising a polysiloxane according to one of Claims 8 to 13 or prepared according to a process according to Claims 1 to 7.

16. Coating composition or polymeric moulding compound containing 0.1% - 10% by weight, preferably 0.5% - 7.5% by weight, more preferably 1% - 5% by weight of a polysiloxane according to one of Claims 8 to 13 or prepared by a process according to Claims 1 to 7.

17. Thermoplastic containing 0.1% - 5% by weight, preferably 0.2% - 2% by weight, more preferably 0.5% - 1% by weight of a polyhydroxy-functional polysiloxane according to one of Claims 8 to 13 or prepared according to a process according to Claims 1 to 7.

## Revendications

1. Procédé pour fabriquer des polysiloxanes polyhydroxyfonctionnels comprenant des groupements polyglycidol-polyéther ramifiés de la formule générale 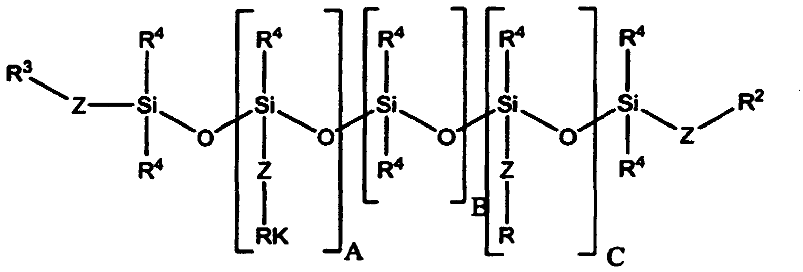 où
Z = C₁-C₁₄-alkylène,
RK = un groupement polyéther non-ramifié consistant en des unités d'oxyde d'alkylène avec 1 à 6 atomes de carbone, et/ou un groupement polyester aliphatique et/ou cycloaliphatique et/ou aromatique présentant un poids moléculaire moyen en poids compris entre 200 et 4000 g/mol,
R = un groupement polyglycidol-polyéther ramifié polyhydroxyfonctionnel qui contient ou est constitué par un groupe polyglycidol ramifié,
R² et R³ représentent, indépendamment l'un de l'autre,
C₁-C₁₄-alkyle, -aryle ou -aralkyle, -O(C₁-C₁₄-alkyle, -aryle ou -aralkyle), - OCO(C₁-C₁₄-alkyle, -aryle ou -aralkyle), -O-CO-O(C₁-C₁₄-alkyle, -aryle ou - aralkyle, -OSO₂(C₁-C₁₄-alkyle, -aryle oder -aralkyle), -H, -Cl, -F, -OH, -R, -RK,
R⁴ = C₁-C₁₄-alkyle, -aryle ou -aralkyle,
A = 0 - 20, de préférence 1 - 15, plus préférablement 1 - 8,
B = 2 - 300, de préférence 10 - 200, plus préférablement 15 - 100 et
C = 0 - 20, de préférence 10 - 15, plus préférablement 1 - 8 ;
où, si C = 0, R³ = R et/ou R² = R,
**caractérisé en ce que** premièrement au moins un composé de départ allylique ou méthallylique est réagi avec au moins un glycidol ou carbonate de glycidol, de telle manière qu'un allylpolyéther ou méthallylpolyéther modifié par un ou plusieurs groupements polyglycidol ramifiés est formé, et puis le ou les allylpolyéther(s) ou méthallylpolyéther(s) ainsi obtenu(s) sont additionnés à un alkylpolysiloxane à fonction Si-H en présence d'un agent à tampon acide.

2. Procédé selon la revendication 1, dans lequel le composé de départ allylique ou méthallylique est choisi dans le groupe consistant en l'alcool allylique, l'alcool méthallylique, un alcool allylique ou méthallylique alkoxylé, un alcool allylique ou méthallylique éthérifié par un diol ou polyol.

3. Procédé selon la revendication 2, dans lequel l'alcool allylique ou l'alcool méthallylique alkoxylé est un alcool allylique ou alcool méthallylique éthoxylé, propoxylé ou butoxylé, ou éthoxylé et propoxylé en mélange, et le diol ou polyol est choisi dans le groupe consistant en éthers, esters, polyéthers ou polyesters dihydroxylés ou polyhydroxylés.

4. Procédé selon l'une quelconque des revendications 1 à 3, **caractérisé en ce que** des allylpolyéthers, méthallylpolyéthers, allylpolyesters et/ou méthallylpolyesters non ramifiés sont ensuite additionnés au polysiloxane.

5. Procédé selon l'une quelconque des revendications 1 à 3, **caractérisé en ce que** des allylpolyéthers, méthallylpolyéthers, allylpolyesters et/ou méthallylpolyesters non ramifiés sont additionnés au polysiloxane dans un mélange avec, avant ou après les allylpolyéthers et/ou méthallylpolyéthers ramifiés.

6. Procédé selon une ou plusieurs des revendications 1 à 5, dans lequel l'addition de l'allylpolyéther ou méthallylpolyéther à l'alkylpolysiloxane à fonction Si-H est effectuée en présence d'un solvant qui permet une solution homogène soit de l'allylpolyéther ou méthallylpolyéther soit de l'alkylpolysiloxane à fonction Si-H dans le mélange réactionnel.

7. Procédé pour fabriquer des polysiloxanes contenant des groupements polyglycidol-polyéther ramifiés, **caractérisé en ce que** les polysiloxanes polyhydrofonctionnels obtenus par les procédés des revendications 1 à 6 sont modifiés par l'alkoxylation, l'estérification, l'éthérification ou formation d'uréthanne d'au moins une partie des groupes hydroxy.

8. Polysiloxane, **caractérisé en ce qu'**il peut être obtenu selon l'une ou plusieurs des revendications 1 à 7.

9. Polysiloxane selon la revendication 8, **caractérisé en ce que** l'au moins un allylpolyéther ou méthallylpolyéther ramifié polyhydroxyfonctionnel présente une structure dendritique.

10. Polysiloxane selon la revendication 8 ou 9, **caractérisé en ce que** l'alkylpolysiloxane est un polysiloxane de méthyle-hydrogène.

11. Polysiloxane selon la revendication 8, **caractérisé en ce qu'**il consiste en 10 à 100 unités de siloxane, de préférence en 20 à 80 unités de siloxane, plus préférablement en 30 à 70 unités de siloxane.

12. Polysiloxane selon la revendication 8 ou 11, dans lequel A et C sont 0 et au moins un des groupes R² ou R³ représente un groupement R.

13. Polysiloxane selon la revendication 8 ou 11, dans lequel exactement un des groupes R² ou R³ représente un groupement R.

14. Utilisation d'un polysiloxane selon l'une quelconque des revendications 8 à 13 ou fabriqué par un des procédés selon les revendications 1 à 7 en tant qu'additif dans des agents de revêtement, des masses de moulage polymériques ou des matières thermoplastiques.

15. Agent de revêtement, masse de moulage polymérique ou matière thermoplastique, contenant un polysiloxane selon l'une quelconque des revendications 8 à 13 ou fabriqué par un des procédés selon les revendications 1 à7.

16. Agent de revêtement ou masse de moulage polymérique, contenant de 0,1 à 10 % en poids, de préférence de 0,5 à 7,5 % en poids, plus préférablement de 1 à 5 % en poids d'un polysiloxane selon l'une quelconque des revendications 8 à 13 ou fabriqué par un des procédés selon les revendications 1 à 7.

17. Matière thermoplastique, contenant de 0,1 à 5 % en poids, de préférence de 0,2 à 2,0 % en poids, plus préférablement de 0,5 à 1 % en poids d'un polysiloxane selon l'une quelconque des revendications 8 à 13 ou fabriqué par un des procédés selon les revendications 1 à 7.
